# EUROPÄISCHE PATENTSCHRIFT

(11) **EP 2 008 530 B1**
(45) Veröffentlichungstag und Bekanntmachung des Hinweises auf die Patenterteilung: **19.01.2011**
(21) Anmeldenummer: 08158491.4
(22) Anmeldetag: 18.06.2008
(51) Int. Cl.: A23L 1/22

(54) **Aromakomposition zum Verringern oder Unterdrücken von unerwünschtem bitteren und adstringierenden Eindruck**
Aroma composition for reducing or suppressing unwanted bitter and astringent impressions
Composition d'aromes destinée à réduire ou à supprimer une impression indésirable amère et astringente

(30) Priorität: 19.06.2007 US 944854 P
(43) Veröffentlichungstag der Anmeldung: 31.12.2008
(73) Patentinhaber: Symrise AG, 37603 Holzminden (DE)
(72) Erfinder: Ley, Jakob, 37603, Holzminden (DE); Langer, Kathrin, 37586, Dassel (DE); Krammer, Gerhard, 37603, Holzminden (DE); Reinders, Gerald, 37671, Höxter (DE); Kindel, Günter, 37671, Höxter (DE); Nolte, Christian, 37603, Holzminden (DE)
(74) Vertreter: Eisenführ, Speiser & Partner

(56) Entgegenhaltungen:
- EP-A- 1 258 200
- EP-A- 1 649 759
- DE-A1-102004 041 496
- JP-A- 2006 296 357
- US-A- 4 789 687

## Beschreibung

Die Erfindung betrifft eine Aromakomposition zum Verringern oder Unterdrücken von bitterem und adstringierendem Eindruck im Mundraum, umfassend (i) einen oder mehrere bestimmte speichelfördernde Aroma- und/oder Geschmackstoffe und (ii) einen oder mehrere bestimmte bittermaskierende Aroma- und/oder Geschmackstoffe und gegebenenfalls (iii) einen oder mehrere weitere Aromastoffe und gegebenenfalls (iv) einen oder mehrere Hilfs- oder Trägerstoffe. Die Erfindung betrifft ferner eine Zubereitung, umfassend eine solche Aromakomposition, die Verwendung einer Aromakomposition zum Verringern oder Unterdrücken einer bitteren und adstringierenden Wirkung einer Verbindung sowie ein entsprechendes Verfahren zum Verringern oder Unterdrücken der bitteren und adstringierenden Wirkung einer Verbindung.

Nahrungs- oder Genussmittel enthalten häufig verschiedene Bitterstoffe und adstringierende Stoffe, die zwar einerseits in Maßen erwünscht und charakteristisch sind (z.B. Coffein in Tee oder Kaffee, Tannine in Rotwein oder Grüntee, Chinin in sogenannten Bitter-Lemon-Getränken, Saponine oder Isoflavonoide bzw. deren Glycoside in Sojamilch, Hopfenextrakte in Bier), andererseits den Wert aber auch stark mindern können (z.B. Flavonoidglycoside und Limonoide in Zitrus-Säften, bitterer und/oder adstringierender Nachgeschmack vieler künstlicher Süßstoffe wie Aspartam oder Saccharin, hydrophobe Aminosäuren und/oder Peptide in Käse). Oft wird der unangenehme Geschmack noch durch unangenehme Gerüche verstärkt, z.B. wird in der oft bitter und adstringierend schmeckenden Sojamilch noch eine sogenannte "bohnige" Note als unangenehm beschrieben.

Bittergeschmack wird durch einzelne Stoffe (Beispiele vgl. unten) verursacht, die an spezielle Bitterrezeptoren auf Geschmackszellen (die in den sogenannten Geschmacksknospen auf der Zunge zu finden sind) binden und über neurochemische Kaskaden ein Signal an das Gehirn senden, dass eine Abwehrreaktion und einen negativen Geschmackseindruck verursacht (vgl. Wolfgang Meyerhof, Reviews of Physiology, Biochemistry and Pharmacology 2005, 154, 37-72).

Adstringierender Geschmack wird in der Regel durch Fällung von Prolin-reichen Proteinen im Speichel durch Adstringenzien, z.B. Metallsalze oder Tannine, verursacht. Der normalerweise als "Schmiermittel" dienende homogene Speichel enthält dann denaturierte Proteine, die die Gleitfähigkeit herabsetzen und dadurch ein raues oder trockenes, auch als adstringierend empfundenes Gefühl im Mund hinterlassen (Isabelle Lesschaeve und Ann C. Noble, American Journal of Clinical Nutrition 2005, 81, 330S-335S).

Inzwischen sind zwar einige Ansätze zur Bitter-Reduktion beschrieben worden (z.B. über Hydroxyflavanone nach EP 1 258 200, γ-Aminobuttersäure nach WO 2005/096841, Hydroxyphenylalkandione nach WO 2007/003527, Hydroxydeoxybenzoine nach WO 2006/106023, WO 2006/058893, 4-Hydroxychalkonderivate nach US Provisional Application 60/894,557, weiterhin über Nucleotide nach US 2002/0177576 oder Pyridiniumsalze wie in Tomislav Soldo und Thomas Hofmann, J. Agric. Food Chem. 2005, 53, 9165-9171 berichtet). Allerdings ist die gleichzeitige Unterdrückung einer starken Adstringens, die von den meisten Verbrauchern in der Regel nicht bevorzugt wird, in den genannten Fällen nicht ausreichend. Teilweise kann durch den Einsatz eines der genannten selektiven Bittermaskierer zwar der Bittergeschmack, z.B. in grünem Teegetränk oder in Sojamilch, wirkungsvoll gesenkt werden, der adstringierende Geschmack wird dadurch aber unglücklicherweise teilweise verstärkt wahrgenommen und führt somit noch nicht zu einem optimalen Produkt.

US 4,789,687 betrifft Lebensmittel enthaltend Vanillylamid und gegebenenfalls weitere Bestandteile. Eine bittermaskierende oder antiadstrigierende Wirkung der Lebensmittelzubereitung ist in diesem Dokument nicht offenbart.

Die JP 2006-296357 offenbart spilantolhaltige Lebensmittelzubereitungen zum Intensivieren eines Salzgeschmackes. Auch hier spielt die Maskierung von bitteren und/oder adstringierenden Eindrücken keine Rolle.

Das Dokument EP 1 649 759 offenbart eine Zusammensetzung enthaltend Kochsalz, Senfpulver und Vanillyi-n-butylether. Die Hauptzielrichtung dieses Dokumentes ist Geschmacksverstärkung.

Die Dokumente EP 1 258 200 und DE 10 2004 024 496 offenbaren die Verwendung von Hydroxyflavanonen bzw. Hydroxybenzoesäureamiden zur Maskierung von bitterem Geschmack.

In EP 1 258 200 werden Kombinationen von bittermaskierenden Flavanonen mit Frucht- und Genusssäuren (z.B. Äpfelsäure, Essigsäure, Citronensäure, Weinsäure, Bernsteinsäure, Adipinsäure, Phosphorsäure) beschrieben. Zwar kann hierdurch der bittere Geschmack reduziert werden, die Säuren tragen jedoch in den meisten Fällen durch ihren Säuregeschmack negativ zur wahrgenommenen Adstringens bei, obwohl sie gleichzeitig den Speichelfluss anregen können.

Es war daher Aufgabe dieser Erfindung, Aromakompositionen anzugeben, die gleichzeitig den bitteren und den adstringierenden Eindruck insbesondere im Mundraum von Verbindungen sowie in Zubereitungen, insbesondere in Nahrungs-, pharmazeutischen- und Genussmitteln zu verringern und die im besten Fall auch noch die unangenehmen Gerüche unterdrücken können.

Diese Aufgabe wird erfindungsgemäß gelöst durch eine Aromakomposition zum Verringern oder Unterdrücken von bitterem und adstringierendem Eindruck im Mundraum, umfassend
(i) einen oder mehrere speichelfördernde Aroma- und/oder Geschmackstoffe wie in Anspruch 1 definiert
   und
(ii) einen oder mehrere bittermaskierende Aroma- und/oder Geschmackstoffe wie in Anspruch 1 definiert
   und gegebenenfalls
(iii) einen oder mehrere weitere Aromastoffe, wobei vorzugsweise wenigstens ein Aromastoff ein Schlechtgerüche unterdrückender Aromastoff ist und gegebenenfalls
(iv) einen oder mehrere Hilfs- oder Trägerstoffe.

Bevorzugt ist eine erfindungsgemäße Aromakomposition, wobei einer, mehrere oder alle der speichelfördernden Aroma- und/oder Geschmackstoffe trigeminal wirksam sind.

Besonders bevorzugt ist eine erfindungsgemäße Aromakomposition, wobei jeweils
(i) einer, mehrere oder alle der speichelfördernden Aroma- und/oder Geschmackstoffe ausgewählt sind aus der Gruppe, bestehend aus 2E,4E-Decadiensäure-N-isobutylamid (trans-Pellitorin). 2E,4Z- Decadiensäure-N-isobutylamid (cis-Pellitorin), 2Z,4Z- Decadiensäure-N-isobutylamid, 2Z,4E-Decadiensäure-N-isobutylamid, 2E,4E-Decadiensäure-N-piperid (Achilleamid), 2E,6Z,8E-Decatriensäure-N-isobutylamid (Spilanthol), 2E,6Z,8E-Decatriensäure-N-([2S]-2-methylbutyl)amid (Homospilanthol), 2E,6Z,8E-Decatriensäure-N-([2R]-2-methylbutyl)amid, 2E,6Z,8E,10E-Dodecatetraensäure-N-(2-methylpropyl)amid (α-Sanshool), 2E,6Z,8E,10E-Dodecatetraensäure-N-(2-hydroxy-2-methylpropyl)amid (α-Hydroxysanshool), 2E,4E,8Z,10E,12E-Tetradecapentaensäure-N-(2-methylpropyl)amid (γ-Sanshool) und 2E,4E,8Z,11Z-Tetradecatetraensäure-N-(2-hydroxy-2-methylpropyl)amid (Bungeanool)
   und jeweils
(ii) einer, mehrere oder alle der bittermaskierenden Aroma- und/oder Geschmackstoffe ausgewählt sind aus der Gruppe, bestehend aus Eriodictyol, Homoeriodictyol oder deren Natriumsalzen, 2.4-Dihydroxybenzoesäurevanillylamid, 2,4,6-Trihydroxybenzoesäure-*N*-(4-hydroxy-3-methoxybenzyl)amid, 2,4-Dihydroxybenzoesäure-*N*-(4-hydroxy-3-methoxybenzyl)amid-Mono-natriumsalz Gingerdion-[2], Gingerdion-[3], Gingerdion-[4], Dehydrogingerdion-[2], Dehydrogingerdion-[3], Dehydrogingerdion-[4]), Diacetyltrimeren, γ-Aminobuttersäure, Divanillin, Phloretin und Davidigenin.

Ganz besonders bevorzugt ist eine erfindungsgemäße Aromakomposition, wobei jeweils
(i) einer, mehrere oder alle der speichelfördernden Aroma- und/oder Geschmackstoffe ausgewählt sind aus der Gruppe, bestehend aus 2E,4E-Decadiensäure-N-isobutylamid (Pellitorin), 2E,4Z-Decadiensäure-N-isobutylamid (cis-Pellitorin), 2Z,4Z- Decadiensäure-N-isobutylamid, 2Z,4E- Decadiensäure-N-isobutylamid, 2E,6Z,8E-Decatriensäure-N-isobutylamid (Spilanthol), 2E,6Z,8E,10E-Dodecatetraensäure-N-(2-methylpropyl)amid (α-Sanshool) und 2E,4E,8Z,11Z-Tetradecatetraensäure-N-(2-hydroxy-2-methylpropyl)amid (Bungeanool)
   und jeweils
(ii) einer, mehrere oder alle der bittermaskierenden Aroma- und/oder Geschmackstoffe ausgewählt sind aus der Gruppe, bestehend aus Eriodictyol, Homoeriodictyol oder deren Natriumsalze, 2,4-Dihydroxybenzoesäurevanillylamid, Gingerdion-[2], Gingerdion-[3], Phloretin und Davidigenin.

Überraschenderweise wurde gefunden, dass die erfindungsgemäßen Aromakompositionen einen bitteren und gleichzeitig einen adstringierenden Eindruck einer Vielzahl von Verbindungen (auch in entsprechenden Mischungen) verringern oder sogar vollständig unterdrücken können. Dabei kann die Verringerung des als unangenehm empfundenen bitteren und gleichzeitig adstringierenden Eindruckes durch Verändern, Maskieren oder Vermindern entstehen. Zur Erfindung gehört auch ein entsprechendes Verringern oder Unterdrücken des entsprechenden (Geschmacks-)Eindruckes auch dann, wenn dieser von einer Verbindung erst in Kombination mit anderen Verbindungen (in einem Stoffgemisch) erzeugt wird. Unter Verringern im Sinne der Erfindung fällt auch das Abschwächen eines bitteren und adstringierenden Nachgeschmacks.

Trigeminal wirksam im Sinne des vorliegenden Textes sind solche Verbindungen, die in der Mundhöhle einen wärmenden, scharfen, stechenden, kühlenden und/oder kribbelnden Eindruck vermitteln können.

Für die (i) speichelfördernden und trigeminal wirksamen Aroma- und/oder Geschmackstoffe sind zum Teil natürliche Quellen, vornehmlich Pflanzenextrakte bekannt und im Sinne der Erfindung einsetzbar. Für bevorzugte speichelfördernden und trigeminal wirksamen Alkamide sind pflanzliche Extrakte wie beispielsweise Alkamide enthaltender Pfefferextrakt *(Piper ssp.,* insbesondere *P. nigrum, P. hispidum, P. tuberculatum, P. longum, P. arboreum, P. futokadsura, P. guineense, P. sarmentosum* oder *Piper nigrum, Var. muntok, P. aff. pedicellatum*), Extrakte aus Zahnwehgras (englisch "toothache grass", *Ctenium aromaticum*), Extrakte aus Estragon (*Artemisia dracunculus*), Bertramwurzel-Extrakte (*Anacyclus ssp.,* insbesondere *Anacylcus pyrethrum L.*), Sonnenhutextrakte (*Echinaceae ssp.,* z.B. *E. angustifolia*), Extrakte aus Szechuan-Pfeffer *(Zanthoxylum ssp.,* insbesondere *Zanthoxylum piperitum, Z. clava-herculin, Z. bungeanum, Z. zanthoxyloides*), Spilanthes- oder Parakresseextrakte *(Spilanthes ssp.,* insbesondere *Spilanthes acmella*), Extrakte aus *Acmella ssp.* (z.B. *A.ciliata*), Extrakte aus *Achillea ssp.* (z.B. *Achillea wilsoniana*), Extrakte aus Fagara-Arten *(Fagara zanthoxyloides*), Extrakte aus *Heliopsis ssp.* (z.B. *H. longipes),* Extrakte aus *Cissampelos glaberrima,* Extrakte aus *Dinosperma erythrococca,* Extrakte aus der Rinde von *Esenbeckia alata* und Extrakte aus *Stauranthus perforatus* besonders geeignet.

Für die (ii) bittermaskierende Aroma- und/oder Geschmackstoffe sind ebenfalls zum Teil natürliche Quellen, vornehmlich Pflanzenextrakte bekannt und anwendbar. Für Eriodictyol und Homoeriodictyol oder deren Natriumsalze können z.B. Extrakte aus *Eriodictyon ssp,* bevorzugt *Eriodictyon californicum* oder *E. angustifolium* und für Phloretin Extrakte aus *Malus ssp.,* vornehmlich aus Apfelbaumprodukten, z.B. Apfelrindenextrakt oder angereicherter Apfelpolyphenolextrakt, vorzugsweise mit Glycosidasen enzymatisch oder mit Säure bzw. saurem lonentauscher behandelter Apfelrindenextrakt oder angereicherter Apfelpolyphenolextrakt im Sinne der Erfindung verwendet werden.

Die pflanzlichen Extrakte können aus den entsprechenden frischen oder getrockneten Pflanzen oder Pflanzenteilen, insbesondere aber aus weißen, grünen oder schwarzen Pfefferkörnern (*P. nigrum*), Stangenpfeffer (*P. longum*), Sonnenhutwurzeln, Bertramswurzel, Szechuan-Peffer, Pflanzenteilen der anderen Zanthoxylum-Arten, Pflanzenteilen der *Spilanthes-* oder Acmella-Arten, Pflanzenteilen der Fagara- oder Heliopsis-Arten, Pflanzenteilen der *Eriodictyon* ssp. oder *Malus ssp.* gewonnen werden. Üblicherweise werden die getrockneten Pflanzenteile (z.B. frische oder getrocknete Wurzeln, Früchte, Samen, Rinde, Holz, Stängel, Blätter oder Blüten[teile]), vorzugsweise in zerkleinerter Form, mit einem für Nahrungs- und Genussmittel geeigneten Lösungsmittel bei Temperaturen von 0°C bis zum Siedepunkt des jeweiligen Lösungsmittels oder Lösungsmittelgemisches extrahiert, anschließend filtriert und das Filtrat ganz oder teilweise eingeengt, vorzugsweise durch Destillation, Gefrier- oder Sprühtrocknung. Der so erhaltene Rohextrakt kann dann noch weiter aufgearbeitet werden, beispielsweise enzymatisch behandelt werden (z.B. mit Glycosidasen zur Ausbeutesteigerung an nicht-zuckerhaltigen Molekülen), mit Säure (z.B. unter Druck), mit sauren lonentauschern oder mit Wasserdampf behandelt werden, meist bei Drücken von 0,01 mbar bis 100 bar, vorzugsweise bei 1 mbar bis 20 bar, und/oder in einem für Nahrungs- und Genussmittel geeigneten Lösungsmittel aufgenommen werden.

Insbesondere für Nahrungs- und Genussmittel zur Extraktion geeignete Lösungsmittel sind Wasser, Ethanol, Methanol, Propylenglycol, Glycerin, Aceton, Dichlormethan, Essigsäureethylester, Diethylether, Hexan, Heptan, Triacetin, pflanzliche Öle oder Fette, superkritisches Kohlendioxid und deren Gemische.

Bevorzugte Hilfs- oder Trägerstoffe sind Maltodextrin, Stärke, natürliche oder künstliche Polysaccharide und/oder Pflanzengummen wie modifizierte Stärken oder Gummi Arabicum, für die Aromakompositionen zugelassene Lösungsmittel wie z.B. Ethanol, 1,2-Propylenglycol, Wasser, Glycerin, Triacetin, Pflanzenöltriglyceride, färbende Mittel, z.B. zugelassene Lebensmittelfarbstoffe, färbende Pflanzenextrakte, Stabilisitoren, Konservierungsstoffe, Antioxidantien, viskositäte-beeinflussende Stoffe.

Bevorzugte Schlechtgerüche unterdrückende Aromastoffe sind Vanillin, Ethylvanillin, Ethylvanillinisobutyrat (= 3-Ethoxy-4-isobutyryloxybenzaldehyd), Furaneol^{®} (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalacton, Tuberolacton), Methylsorbat, Diacetyl, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-1-al und Phenylacetaldehyd.

In einer bevorzugten erfindungsgemäßen Aromakomposition sind die Komponenten der Gruppe (i) zu den Komponenten der Gruppe (ii) in einem Verhältnis von 1 : 1.000.000 bis 1 : 1 eingesetzt, bevorzugt 1 : 10.000 bis 1 : 10, besonders bevorzugt 1 : 2.000 bis 1 : 50, jeweils bezogen auf das Gewichtsverhältnis der beiden Komponenten.

Sofern vorhanden werden die Komponenten der Gruppe (iii) erfindungsgemäß bevorzugt in der erfindungsgemäßen Aromakomposition in einem Verhältnis von 10 : 1 bis 1 : 10 eingesetzt, wobei das Verhältnis das Gewichtsverhältnis des Gewichts der Komponenten der Gruppe (iii) zu der Summe der Gewichte der Komponenten der Gruppe (i) und (ii) darstellt.

Sofern vorhanden werden erfindungsgemäß bevorzugt die Komponenten der Gruppe (iv) in einem Verhältnis von 1 : 1.000 bis 1.000 : 1, bevorzugt 1 : 100 bis 100 : 1 eingesetzt, wobei das Verhältnis das Gewichtverhältnis der Komponenten der Gruppe (iv) zu der Summe der Gewichte der Komponenten der Gruppe (i), (ii) und (iii) darstellt.

Eine besonders bevorzugte erfindungsgemäße Aromakomposition umfasst zumindest eine Komponente zum Verstärken eines süßen, salzigen, gegebenenfalls leicht sauren und/oder Umami-Geschmackseindrucks. Es werden somit die erfindungsgemäßen Aromakompositionen in Kombination mit zumindest einer (weiteren) zur Verstärkung eines angenehmen Geschmackseindrucks (süß, salzig, Umami gegebenenfalls leicht sauer) geeigneten Substanz verwendet. Hierbei können bevorzugt salzig schmeckende Verbindungen / salzverstärkende Verbindungen wie in der WO 2007/045566 offenbart, die hinsichtlich dieser Verbindungen auf dem Wege der Verweisung Bestandteil dieser Anmeldung wird, Hesperitin wie in der WO 2007/014879 offenbart, die hinsichtlich dieser Verbindungen auf dem Wege der Verweisung Bestandteil dieser Anmeldung wird, oder Propenylphenylglycoside (Chavicolglycoside) wie in der US Provisional Application 60/886,548 beschrieben, die hinsichtlich dieser Verbindungen auf dem Wege der Verweisung Bestandteil dieser Anmeldung wird, sowie Umami - Verbindungen wie in den US Provisional Application 60/829,958 / Veröffentlichungsnummer: WO 2008/046895 bzw. US Provisional Application 60/916,589 beschrieben, die hinsichtlich dieser Verbindungen auf dem Wege der Verweisung Bestandteil dieser Anmeldung werden.

Eine bevorzugte erfindungsgemäße Aromakomposition umfasst außerdem wenigstens eine Verbindung, die bittere und adstringierende Eindrücke im Mundraum erzeugen kann, wobei diese Eindrücke aufgrund der enthaltenen Komponenten der Gruppen (i) und (ii) verringert und bevorzugt nicht wahrnehmbar sind.

Verbindungen die bitter und gleichzeitig adstringierend sowie gegebenenfalls pappig, staubig, trocken, mehlig, ranzig oder metallische Eindrücke im Mundraum erzeugen können, sind beispielsweise: Xanthinalkaloide, Xanthine (Coffein, Theobromin, Theophyllin und Methylxanthine), Alkaloide (Chinin, Brucin, Strychnin, Nicotin), phenolische Glycoside (z.B. Salicin, Arbutin), Flavonoidglycoside (z.B. Neohespereidin, Hesperidin, Naringin, Quercitrin, Rutin, Hyperoside, Isoquercitrin, Avicularin), Isoflavonoide oder deren Glycoside (z.B. Daidzin, Genistin und deren Acyl- bzw. Malonylester), bitter schmeckende Chalcone oder Chalconglycoside (z.B. Phloridzin, Phloretin-2-O'-xyloglucosid), hydrolisierbare Tannine (Gallus- oder Elagsäureester von Kohlenhydraten, z.B. Pentagalloylglucose), nichthydrolisierbare Tannine (ggfs. galloylierte Catechine oder Epicatechine und deren Oligomeren, z.B. Proanthyocyanidine oder Procyanidine, Thearubigenin), Flavone (z.B. Quercetin, Taxifolin, Myricetin), Phenole wie z.B. Salicin, Polyphenole (z.B. Hydroxyzimtsäuren und deren Ester wie γ-Oryzanol, Kaffeesäure oder deren Ester, z.B. Chlorogensäure, Neochlorogensäure, Cryptochlorogensäure), terpenoide Bitterstoffe (z.B. Limonoide wie Limonin oder Nomilin aus Zitrusfrüchten, Lupolone und Humolone aus Hopfen, Iridoide, Secoiridoide), Triterpenglycoside wie P57A und verwandte Wirkstoffe aus *Hoodia gordonii,* Absinthin aus Wermut, Amarogentin aus Enzian, metallische Salze (insbesondere Kalium-, Magnesium- und Calciumsalze, Kaliumchlorid, Kaliumgluconat, Kaliumcarbonat, Kaliumsulfat, Kaliumlactat, Kaliumglutamat, Kaliumsuccinat, Kaliummalat, Natriumsulfat, Magnesiumsulfat), pharmazeutische Wirkstoffe (z.B. Fluorchinolon-Antibiotika, Paracetamol, Aspirin, β-Lactam-Antibiotika, Ambroxol, Propylthiouracil [PROP], Guaifenesin), Vitamine (beispielsweise Vitamin H, Vitamine aus der B-Reihe wie Vitamin B1, B2, B6, B12, Niacin, Panthotensäure), Denatoniumbenzoat, Sucraloseoctaacetat, Eisensalze, Aluminiumsalze, Zinksalze, Harnstoff, ungesättigte Fettsäuren, insbesondere ungesättigte Fettsäuren in Emulsionen, bitter schmeckende Aminosäuren (z.B. Leucin, Isoleucin, Valin, Tryptophan, Prolin, Histidin, Tyrosin, Lysin oder Phenylalanin) und bitter schmeckende Peptide (insbesondere Peptide mit einer Aminosäure aus der Gruppe Leucin, Isoleucin, Valin, Tryptophan, Prolin oder Phenylalanin am N- oder C-Terminus). Bevorzugt sind dabei als Stoffe, die bitter, adstringierend, pappig, staubig, trocken, mehlig, ranzig oder metallisch schmecken, Coffein, Theobromin und Theophyllin, Chinin, Salicin, Arbutin, Neohesperidin, Naringin, Quercitrin, Rutin, Daidzin, Genistin und deren Acyl- bzw. Malonylester, Phloridzin, Gallus- oder Elagsäureester von Kohlenhydraten (z.B. Pentagalloylglucose), ggfs. galloylierte Catechine oder Epicatechine, Proanthyocyanidine oder Procyanidine, Thearubigenin, Quercetin, Taxifolin, Myricetin, γ-Oryzanol, Kaffeesäure oder deren Ester (z.B. Chlorogensäure und Isomere), Limonoide wie Limonin oder Nomilin aus Zitrusfrüchten, Lupolone und Humolone aus Hopfen, Triterpenglycoside wie P57A und verwandte Wirkstoffe aus *Hoodia gordonii,* Absinthin aus Wermut, Amarogentin aus Enzian, metallische Salze (insbesondere Kalium-, Magnesium- und Calciumsalze, Kaliumchlorid, Kaliumgluconat, Kaliumcarbonat, Kaliumsulfat, Kaliumlactat, Kaliumglutamat, Kaliumsuccinat, Kaliummalat, Natriumsulfat, Magnesiumsulfat) und pharmazeutische Wirkstoffe (z.B. Fluorchinolon-Antibiotika, Paracetamol, Aspirin, β-Lactam-Antibiotika, Ambroxol, Propylthiouracil [PROP], Guaifenesin).

Verbindungen, die einen bitteren und adstringierenden sowie gegebenenfalls pappigen, kalkigen, staubigen, trockenen, mehligen, ranzigen oder metallischen Nachgeschmack im Mundraum erzeugen können, können Aroma- oder Geschmackstoffe mit einem nicht unangenehmen Primärgeschmack (beispielsweise süß, salzig, würzig, sauer) und/oder -geruch sein und z.B. zur Gruppe der Süßstoffe, Zuckeraustauschstoffe oder der Aromastoffe gehören. Beipielsweise seien genannt: Kaliumsalze (insbesondere Kaliumchlorid, Kaliumgluconat, Kaliumcarbonat, Kaliumsulfat, Kaliumlactat, Kaliumglutamat, Kaliumsuccinat, Kaliummalat), Aspartam, Neotam, Superaspartam, Saccharin, Sucralose, Tagatose, Monellin, Stevioside, Rebaudioside, Hernandulcin, Thaumatin, Miraculin, Glycyrrhizin, Glycyrrhetinsäure oder deren Derivate, Cyclamat oder die pharmazeutisch akzeptablen Salze der vorgenannten Verbindungen.

Wie bereits weiter oben angedeutet wurde überraschenderweise gefunden, dass die erfindungsgemäßen Aromakompositionen einen bitteren und gleichzeitig adstringierenden Eindruck im Mundraum, der insbesondere durch die genannten Verbindungen hervorgerufen wird, in einer Vielzahl von Stoffgemischen, Nahrungs-, pharmazeutischen (Arznei-) und Genussmitteln (besonders Beispiele sind tee-, insbesondere grünteebasierte Getränke, Sojaprodukte, insbesondere Sojamilchprodukte, kakaohaltige Produkte, insbesondere Schokolade) reduzieren oder sogar vollständig unterdrücken können.

Entsprechend dem Vorgesagten eignen sich die erfindungsgemäßen Aromakompositionen insbesondere zur Kombination mit Stoffgemischen und Zubereitungen, insbesondere Nahrungs-, pharmazeutischen-/Arznei-, Mundhygiene- oder Genussmitteln, die Verbindungen enthalten, die einen bitteren und adstringierenden sowie gegebenenfalls pappigen, kalkigen, staubigen, trockenen, mehligen, ranzigen oder metallischen (Nach-)Geschmack im Mudnraum erzeugen können. Hierbei wird insbesondere auf die vorstehende Aufzählung von Beispielen dieser Verbindungen verwiesen. Die erfindungsgemäßen Aromakompositionen eignen sich also insbesondere zur Kombination mit
(a) Zubereitungen, die bitter und gleichzeitig adstringierend sowie gegebenenfalls pappig, staubig, trocken, mehlig, ranzig und/oder metallisch schmecken und/oder
(b) Zubereitungen, die einen bitteren und gleichzeitig adstringierenden, pappigen, staubigen, trockenen, mehligen, ranzigen oder metallischen Nachgeschmack haben.

Die vorgenannten unangenehm schmeckenden Stoffe, Stoffgemische oder Nahrungs-, Arznei- oder Genussmittel können noch weitere, in der Regel nicht unangenehme Geschmacks- und/oder Geruchsqualitäten besitzen. Als weitere, im Sinne der vorliegenden Erfindung nicht unangenehme Geschmacksqualitäten sind z.B. die Eindrücke würzig, umami, süß, salzig und wenig sauer zu nennen. Dementsprechend ist Teil der Erfindung eine Zubereitung, enthaltend eine erfindungsgemäße Aromakomposition.

Bevorzugt ist eine solche Zubereitung eine pharmazeutische Zubereitung, eine Halbfertigware, unmittelbar zur Ernährung oder zum Genuss bestimmt und/oder der Mundpflege dienende Zubereitung.

Bevorzugt sind erfindungsgemäße Zubereitungen, wobei bezogen auf den Gesamtteil der Zubereitung die Konzentration
wenigstens einer, bevorzugt der Summe der Komponenten der Gruppe (i), im Bereich von 0,005 bis 5 ppm, bevorzugt von 0,02 bis 2 ppm, besonders bevorzugt von 0,05 bis 0,5 ppm liegt und
die Summe der Komponenten der Gruppe (ii), im Bereich von 0,5 bis 500 ppm, bevorzugt von 10 bis 200 ppm, besonders bevorzugt von 20 bis 100 ppm liegt und bevorzugt
die Summe der Komponenten der Gruppe (iii), im Bereich von 0,0005 bis 500 ppm, bevorzugt von 0,005 bis 100 ppm, besonders bevorzugt 0,5 bis 50 ppm liegt.

Weiter bevorzugt sind erfindungsgemäße Zubereitungen, wobei die Gesamtmenge aller Komponenten (i), (ii) und (iii) bezogen auf die Gesamtteile der Zubereitung im Bereich von 0,5 bis 500 ppm, bevorzugt im Bereich von 5 bis 200 ppm, besonders bevorzugt im Bereich von 10 bis 100 ppm liegt.

Besonders bevorzugt liegen Konzentrationen (bezogen auf die fertig zu konsumierende Zubereitung enthaltend die Aromakopositionen) hierbei für (i) eines oder mehrere der speichelfördenden, prickelnd, scharf und/oder warm schmeckenden die Alkamide (speichelfördernde Aroma- und/oder Geschmackstoffe) bei gleich oder unter 0,5 ppm, wobei der als kribbelnd, scharf, betäubend oder warm beschriebene Eigengeschmack weitgehend verschwindet, die speichelanregende Wirkung aber noch vorhanden ist. Dadurch erhält man eine besonders wirksame Maskierung.

Wie bereits erwähnt, betrifft ein Aspekt der vorliegenden Erfindung die Verwendung der erfindungsgemäßen Aromakompositionen zur Maskierung oder Verminderung des unangenehmen Geschmackseindruckes eines unangenehm schmeckenden Stoffes, d. h. als Geschmackskorrigenz. Vorzugsweise werden die erfindungsgemäßen Aromakompositionen in einer zur oralen Aufnahme hergerichteten pharmazeutischen Zubereitung, einer der Ernährung, der Mundpflege oder dem Genuss dienenden Zubereitung eingesetzt, wobei die Zubereitung üblicherweise einen oder mehrere unangenehm, d.h. bitter und adstringierend schmeckende Stoffe umfasst.

Erfindungsgemäße Zubereitungen umfassen vorzugsweise 0,000001 Gew.-% bis 95 Gew.-%, bezogen auf das Gesamtgewicht der Zubereitung, einer erfindungsgemäßen Aromakomposition. Daneben sind üblicherweise ein oder mehrere unangenehm schmeckende Stoffe vorhanden.

Besonders bevorzugt sind erfindungsgemäße Zubereitungen, die zumindest einen bitteren und einen adstringierend schmeckenden Stoff umfassen, wobei die Menge des bitteren und des adstringierend schmeckenden Stoffes ausreicht, um in einer Vergleichszubereitung, die keine erfindungsgemäßen Aromakomposition umfasst, aber ansonsten identisch zusammengesetzt ist, als unangenehmer Geschmack wahrgenommen zu werden, und die Menge der erfindungsgemäßen Aromakomposition in der Zubereitung ausreicht, um im Vergleich mit der Vergleichszubereitung den unangenehmen Geschmackseindruck des bitteren und des adstringierend schmeckenden Stoffes sensorisch zu verändern, zu maskieren oder zu vermindern.

Erfindungsgemäße Zubereitungen können auch als Halbfertigware, als Riech-, Aroma- oder Geschmacksstoffkomposition oder als Würzmischung vorliegen.

Erfindungsgemäße Zubereitungen, die als Halbfertigwaren dienen, enthalten in der Regel 0,0001 Gew.-% bis 95 Gew.-%, bevorzugt 0,001 bis 80 Gew.-%, insbesondere aber 0,01 Gew.-% bis 50 Gew.-%, bezogen auf das Gesamtgewicht der Zubereitung, an erfindungsgemäßer Aromakomposition. Erfindungsgemäße Zubereitungen, die als Halbfertigwaren vorliegen, können zur Maskierung oder Verminderung des unangenehmen Geschmackseindrucks von Fertigware-Zubereitungen dienen, die unter Verwendung der Halbfertigware-Zubereitung hergestellt werden.

Der Ernährung oder dem Genuss dienende Zubereitungen im Sinne der Erfindung sind z.B. Backwaren (z.B. Brot, Trockenkekse, Kuchen, sonstiges Gebäck), Süßwaren (z.B. Schokoladen, Schokoladenriegelprodukte, sonstige Riegelprodukte, Fruchtgummi, Hart- und Weichkaramellen, Kaugummi), alkoholische oder nicht-alkoholische Getränke (z.B. Kaffee, Tee, Wein, weinhaltige Getränke, Bier, bierhaltige Getränke, Liköre, Schnäpse, Weinbrände, fruchthaltige Limonaden, isotonische Getränke, Erfrischungsgetränke, Nektare, Obst- und Gemüsesäfte, Frucht- oder Gemüsesaftzubereitungen), Instantgetränke (z.B. Instant-Kakao-Getränke, Instant-Tee-Getränke, Instant-Kaffeegetränke, Instant-Fruchtgetränke), Fleischprodukte (z.B. Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (z.B. Frühstückscerealien, Müsliriegel, vorgegarte Fertigreis-Produkte), Milchprodukte (z.B. Milchgetränke, Buttermilchgetränke, Milcheis, Joghurt, Kefir, Frischkäse, Weichkäse, Hartkäse, Trockenmilchpulver, Molke, Butter, Buttermilch, teilweise oder ganz hydrolisierte Milchprotein-haltige Produkte), Produkte aus Sojaprotein oder anderen Sojabohnen-Fraktionen (z.B. Sojamilch und daraus gefertigte Produkte, Fruchtgetränke mit Sojaprotein, Sojalecithin-haltige Zubereitungen, fermentierte Produkte wie Tofu oder Tempe oder daraus gefertigte Produkte), Fruchtzubereitungen (z.B. Konfitüren, Fruchteis, Fruchtsoßen, Fruchtfüllungen), Gemüsezubereitungen (z.B. Ketchup, Soßen, Trockengemüse, Tiefkühlgemüse, vorgegarte Gemüse, eingekochte Gemüse), Knabberartikel (z.B. gebackene oder frittierte Kartoffelchips oder Kartoffelteigprodukte, Extrudate auf Mais- oder Erdnussbasis), Produkte auf Fett-und Ölbasis oder Emulsionen derselben (z.B. Mayonnaise, Remoulade, Dressings), sonstige Fertiggerichte und Suppen (z.B. Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden. Die Zubereitungen im Sinne der Erfindung können auch als Halbfertigware zur Herstellung weiterer der Ernährung oder dem Genuss dienenden Zubereitungen dienen. Die Zubereitungen im Sinne der Erfindung können auch in Form von Kapseln, Tabletten (nichtüberzogene sowie überzogene Tabletten, z.B. magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Der Mundpflege dienende Zubereitungen im Sinne der Erfindung sind insbesondere Mund- und/oder Zahnpflegemittel wie Zahnpasten, Zahngele, Zahnpulver, Mundwässer, Kaugummis und andere Mundpflegemittel.

Pharmazeutische Zubereitungen umfassen einen pharmazeutischen Wirkstoff. Vorteilhafte pharmazeutische Wirkstoffe sind beispielsweise steroidale entzündungshemmende Substanzen vom Kortikosteroiden-Typ wie z.B. Hydrocortison, Hydrocortison-Derivate wie Hydrocortison-17-butyrat, Dexamethason, Dexamethasonphosphat, Methylprednisolon oder Cortison.

Vorteilhafte nichtsteroidale pharmazeutische Wirkstoffe sind beispielsweise Entzündungshemmer wie Oxicame wie Piroxicam oder Tenoxicam; Salicylate wie Aspirin® (Acetylsalicylsäure), Disalcid, Solprin oder Fendosal; Essigsäure-Derivate wie Diclofenac, Fenclofenac, Indomethacin, Sulindac, Tolmetin, oder Clindanac; Fenamate wie Mefenamic, Meclofenamic, Flufenamic oder Niflumic; Propionsäure-Derivate wie Ibuprofen, Naproxen, Flurbiprofen, Benoxaprofen oder Pyrazole wie Phenylbutazon, Oxyphenylbutazon, Febrazon oder Azapropazon.

Besonders bevorzugte pharmazeutische Zubereitungen sind nicht verschreibungspflichtige Produkte und frei verkäufliche Arzneimittel, sogenannte OTC ("over the counter") - Präparate, enthaltend Wirkstoffe wie Paracetamol, Acetylsalicylsäure oder Ibuprofen, Vitamine (beispielsweise Vitamin H, Vitamine aus der B-Reihe wie Vitamin B1, B2, B6, B12, Niacin, Panthotensäure, vorzugsweise in Form von (Brause)Tabletten oder Kapseln), Mineralien (vorzugsweise in Form von (Brause)Tabletten oder Kapseln) wie Eisensalze, Zinksalze, Selensalze, Produkte enthaltend Wirkstoffe oder Extrakte von Spitzwegerich (z.B. in Hustensirup) oder Johanniskraut.

Weitere übliche Wirk-, Grund-, Hilfs- und Zusatzstoffe für der Ernährung, der Mundpflege oder dem Genuss dienende Zubereitungen können in Mengen von 5 bis 99,999999 Gew.-%, vorzugsweise 10 bis 80 Gew.-%, bezogen auf das Gesamtgewicht der Zubereitung, enthalten sein. Ferner können die Zubereitungen Wasser in einer Menge bis zu 99,999999 Gew.-%, vorzugsweise 5 bis 80 Gew.-%, bezogen auf das Gesamtgewicht der Zubereitung, aufweisen.

Die erfindungsgemäßen Zubereitungen, enthaltend die erfindungsgemäße Aromakomposition, werden gemäß einer bevorzugten Ausgestaltung hergestellt, indem die Bestandteile der Gruppen (i), (ii) und ggfs. auch (iii) der erfindungsgemäßen Aromakomposition als Substanzen, als Lösung oder in Form eines Gemischs mit einem festen oder flüssigen Trägerstoff in eine der Ernährung, der Mundpflege oder dem Genuss dienende oder orale pharmazeutische Basis-Zubereitung eingearbeitet werden. Vorteilhafterweise können als Lösung vorliegende erfindungsgemäße Zubereitungen auch durch Sprühtrocknung in eine feste Zubereitung überführt werden.

Gemäß einer weiteren bevorzugten Ausführungsform werden zur Herstellung erfindungsgemäßer Zubereitungen die erfindungsgemäßen Aromakomposition und gegebenenfalls andere Bestandteile der erfindungsgemäßen Zubereitung in Form von Emulsionen, in Liposomen, z.B. ausgehend von Phosphatidylcholin, in Microsphären, in Nanosphären oder auch in Kapseln, Granulaten oder Extrudaten aus einer für Lebens- und Genussmittel geeigneten Matrix, z.B. aus Stärke, Stärkederivaten, Cellulose oder Cellulosederivaten (z.B. Hydroxypropylcellulose), anderen Polysacchariden (z.B. Alginat), natürlichen Fetten, natürlichen Wachsen (z.B. Bienenwachs, Carnaubawachs) oder aus Proteinen, z.B. Gelatine, eingearbeitet.

In einem weiteren bevorzugten Herstellungsverfahren wird die erfindungsgemäße Aromakomposition vorher mit einem oder mehreren geeigneten Komplexbildnern, beispielsweise mit Cycloglycanen, z.B. Cyclofructanen, Cyclodextrinen oder Cyclodextrinderivaten, bevorzugt α-, γ- und β-Cyclodextrin, komplexiert und in dieser komplexierten Form eingesetzt.

Besonders bevorzugt ist eine erfindungsgemäße Zubereitung, bei der die Matrix so gewählt wird, dass die erfindungsgemäße Aromakomposition verzögert von der Matrix freigegeben wird, so dass man eine langanhaltende Wirkung erhält.

Als weitere Bestandteile für erfindungsgemäße Zubereitungen können übliche Grund-, Hilfs- und Zusatzstoffe für Nahrungs- oder Genussmittel verwendet werden. Einige dieser Substanzen besitzen einen unangenehmen Geschmack im Sinne von bitter und adstringierend wirkend.

Beispiele üblicher Grund-, Hilfs- und Zusatzstoffe für erfindungsgemäße Zubereitungen sind Wasser, Gemische frischer oder prozessierter, pflanzlicher oder tierischer Grund- oder Rohstoffe (z.B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder -pasten oder deren Gemische), verdauliche oder nicht verdauliche Kohlenhydrate (z.B. Saccharose, Maltose, Fructose, Glucose, Dextrine, Amylose, Amylopektin, Inulin, Xylane, Cellulose), Zuckeralkohole (z.B. Sorbit), natürliche oder gehärtete Fette (z.B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z.B. Kaliumstearat), proteinogene oder nichtproteinogene Aminosäuren und verwandte Verbindungen (z.B. Taurin), Peptide, native oder prozessierte Proteine (z.B. Gelatine), Enzyme (z.B. Peptidasen), Nukleinsäuren, Nucleotide, andere als die vorbeschriebenen Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Emulgatoren (z.B. Lecithine, Diacylglycerole), Stabilisatoren (z.B. Carageenan, Alginat), Konservierungsstoffe (z.B. Benzoesäure, Sorbinsäure), Antioxidantien (z.B. Tocopherol, Ascorbinsäure), Chelatoren (z.B. Citronensäure), organische oder anorganische Säuerungsmittel (z.B. Äpfelsäure, Essigsäure, Citronensäure, Weinsäure, Phosphorsäure), zusätzliche Bitterstoffe (z.B. Chinin, Coffein, Limonin, Amarogentin, Humolone, Lupolone, Catechine, Tannine), Süßstoffe (z.B. Saccharin, Cyclamat, Aspartam, Neotam), mineralische Salze (z.B. Natriumchlorid, Kaliumchlorid, Magnesiumchlorid, Natriumphosphate), die enzymatische Bräunung verhindernde Stoffe (z.B. Sulfit, Ascorbinsäure), etherische Öle, Pflanzenextrakte, natürliche oder synthetische Farbstoffe oder Farbpigmente (z.B. Carotinoide, Flavonoide, Anthocyane, Chlorophyll und deren Derivate), Gewürze, synthetische, natürliche oder naturidentische Aromastoffe oder Riechstoffe sowie Geruchskorrigentien.

Zahnpflegemittel (als Basis für die Mundpflege dienende Zubereitungen), die die erfindungsgemäßen Aromakomposition enthalten, umfassen bevorzugt ein abrasives System (Schleif- oder Poliermittel), wie z.B. Kieselsäuren, Calciumcarbonate, Calciumphosphate, Alumiuniumoxide und/oder Hydroxylapatite, oberflächenaktive Substanzen wie z.B. Natriumlaurylsulfat, Natriumlaurylsarcosinat und/oder Cocamidopropylbetain, Feuchthaltemitteln wie z.B. Glycerin und/oder Sorbit, Verdickungsmittel, wie z.B. Carboxymethylcellulose, Polyethylenglycole, Carrageenan und/oder Laponite^{®}, Süßstoffe, wie z.B. Saccharin, andere Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), Kühlwirkstoffen wie z.B. Menthol, Mentholderivate (z.B. L-Menthol, L-Menthyllactat, L-Menthylalkylcarbonate, Menthonketale, Menthancarbonsäureamide), 2,2,2-Trialkylessigsäureamiden (z.B. 2,2-Diisopropylpropionsäuremethylamid), Icilin-Derivate, Stabilisatoren und aktive Wirkstoffe, wie z.B. Natriumfluorid, Natriummonofluorphosphat, Zinndifluorid, quartären Ammoniumfluoriden, Zinkcitrat, Zinksulfat, Zinnpyrophosphat, Zinndichlorid, Mischungen verschiedener Pyrophosphate, Triclosan, Cetylpyridiniumchlorid, Aluminiumlactat, Kaliumcitrat, Kaliumnitrat, Kaliumchlorid, Strontiumchlorid, Wasserstoffperoxid, Aromen, Natriumbicarbonat und/oder Geruchskorrigentien.

Kaugummis (als weiteres Beispiel für die Mundpflege dienende Zubereitungen), welche erfindungsgemäße Aromakompositionen enthalten, umfassen bevorzugt eine Kaugummibase, d.h. eine beim Kauen plastisch werdende Kaumasse, Zucker verschiedener Arten, Zuckeraustauschstoffe, Süßstoffe, Zuckeralkoholen, andere Geschmackskorrigenzien für unangenehme Geschmackseindrücke, Geschmackskorrigenzien für weitere, in der Regel nicht unangenehme Geschmackseindrücke, geschmacksmodulierende Stoffe (z.B. Inositolphosphat, Nucleotide wie Guanosinmonophosphat, Adenosinmonophosphat oder andere Stoffe wie Natriumglutamat oder 2-Phenoxypropionsäure), die im vorherigen Abschnitt genannten Kühlwirkstoffe, Feuchthaltemittel, Verdicker, Emulgatoren, Aromen, Stabilisatoren und/oder Geruchskorrigentien.

Bevorzugte erfindungsgemäße Zubereitungen sind der Ernährung, der Mundpflege oder dem Genuss dienende Zubereitungen, hinsichtlich deren Zusammensetzungen das Vorgesagte gilt.

Die erfindungsgemäßen der Ernährung, der Mundpflege oder dem Genuss dienenden Zubereitungen sind regelmäßig Produkte, die dazu bestimmt sind, in die menschliche Mundhöhle eingebracht zu werden, dort eine bestimmte Zeit zu verbleiben und anschließend entweder verzehrt (z.B. verzehrfertige Lebensmittel) oder wieder aus der Mundhöhle entfernt zu werden (z.B. Kaugummis oder Zahnpasta). Es versteht sich, dass der Einsatz der erfindungsgemäßen Aromakompositionen für jede Art solcher Produkte vorgesehen ist. Zu diesen Produkten gehören dabei sämtliche Stoffe oder Erzeugnisse, die dazu bestimmt sind, in verarbeitetem, teilweise verarbeitetem oder unverarbeitetem Zustand vom Menschen in die Mundhöhle aufgenommen zu werden. Hierzu zählen auch Stoffe, die Lebensmitteln bei ihrer Herstellung, Verarbeitung oder Bearbeitung zugesetzt werden und dazu vorgesehen sind, in die menschliche Mundhöhle eingebracht zu werden.

Es versteht sich, dass die erfindungsgemäßen Aromakompositionen insbesondere in Lebensmitteln eingesetzt werden können. Im Rahmen des vorliegenden Textes werden unter einem "Lebensmittel" insbesondere Stoffe verstanden, die dazu bestimmt sind, in unverändertem, zubereitetem oder verarbeitetem Zustand vom Menschen geschluckt und dann verdaut zu werden; als Lebensmittel werden insoweit auch Umhüllungen, Überzüge oder sonstige Umschließungen verstanden, die dazu bestimmt sind, mitverschluckt zu werden, oder bei denen ein Verschlucken vorauszusehen ist. Auch bestimmte Produkte, die üblicherweise wieder aus der Mundhöhle entfernt werden (z.B. Kaugummis) sind im Rahmen des vorliegenden Textes als Lebensmittel zu verstehen, da bei ihnen nicht auszuschließen ist, dass sie zumindest teilweise geschluckt werden.

Insbesondere werden die erfindungsgemäßen Aromakompositionen in verzehrfertigen Lebensmitteln eingesetzt. Unter einem verzehrfertigen Lebensmittel ist hierbei ein Lebensmittel zu verstehen, das hinsichtlich der für den Geschmack maßgeblichen Substanzen bereits vollständig zusammengesetzt ist. Unter den Begriff "verzehrfertiges Lebensmittel" fallen auch entsprechende Getränke sowie feste oder halbfeste verzehrfertige Lebensmittel. Als Beispiele seien genannt Tiefkühlprodukte, die vor dem Verzehr aufgetaut und auf Verzehrtemperatur erwärmt werden müssen. Auch Produkte wie Joghurt oder Eiscreme aber auch Kaugummis oder Hartkaramellen zählen zu den verzehrfertigen Lebensmitteln.

Unter einer der Mundpflege dienenden Zubereitung (Mundpflegeprodukt, auch Mundhygieneprodukt oder mundhygienische Zubereitung genannt) im Sinne der Erfindung wird eine Zubereitung zur Reinigung und Pflege der Mundhöhle und des Rachenraumes sowie zur Erfrischung des Atems verstanden. Hierbei ist die Pflege der Zähne und des Zahnfleisches ausdrücklich eingeschlossen. Darreichungsformen gebräuchlicher mundhygienischer Formulierungen sind Cremes, Gele, Pasten, Schäume, Emulsionen, Suspensionen, Areosole, Sprays als auch Kapseln, Granulate, Pastillen, Tabletten, Bonbons oder Kaugummis, ohne dass diese Aufzählung für die Zwecke dieser Erfindung limitierend verstanden werden soll.

Die erfindungsgemäßen Aromakompositionen können wie bereits gesagt auch in Lebensmittel-Halbfertigwaren eingesetzt werden. Der Begriff Lebensmittel-Halbfertigware bezieht sich hierbei auf Lebensmittel, die dazu bestimmt sind, erst im weiter verarbeiteten Zustand, z. B. nach Hinzufügen von für den sensorischen Eindruck (mit)entscheidenden Aroma- oder Geschmacksstoffen verzehrt zu werden.

Entsprechend dem Vorgesagten ist Teil der Erfindung auch die Verwendung einer erfindungsgemäßen Aromakomposition (bevorzugt ohne eine Verbindung, die bittere und adstringierende Eindrücke im Mundraum erzeugen kann, zum Verringern oder Unterdrücken einer bitteren und adstringierenden Wirkung einer Verbindung.

Bei der erfindungsgemäßen Verwendung kann es vorteilhaft sein, wenn nicht alle bitter-schmeckenden Nuancen (das Gleiche gilt auch gegebenenfalls für die adstringierende Wirkung) überdeckt werden, da diese unter Umständen auch erwünscht sein können.

Teil der Erfindung ist auch ein Verfahren zum Verringern oder Unterdrücken der bitteren und adstringierenden Wirkung einer Verbindung, umfassend die Schritte
a) Bereitstellen einer Verbindung, die bittere und adstringierende Wirkung im Mundraum entfalten kann,
b) Bereitstellen einer erfindungsgemäßen Aromakomposition und
c) Vermischen der in Schritt a) und b) bereitgestellten Komponenten in einem Verhältnis zueinander, so dass die Verbindung mit bitterer und adstringierender Wirkung diese Wirkung bei Einführen des Gemisches in den Mundraum nur abgeschwächt oder gar nicht entfaltet.

Nachfolgend wird die Erfindung anhand von Beispielen und den Ansprüchen weiter erläutert. Die Beispiele dienen zur Verdeutlichung der Erfindung, ohne den Schutzbereich der Patentansprüche einzuschränken.

### Beispiele

### Anwendungsbeispiel 1: Aromakompositionen

| | Zubereitung (Einsatz in Gew.-%) | | | | | | | |
|---|---|---|---|---|---|---|---|---|
| Inhaltsstoff | A | B | C | D | E | F | G | H |
| 10 Gew.-% trans-Pellitorin (z.B. nach WO 2004/043906) in 1,2-Propylenglycol/ Diethylmalonat | | | | 0,25 | 0,25 | 0,5 | 0,25 | |
| Ca. 1,3 Gew.-% Pellitorin sprühgetrocknet | 2,5 | | 2,5 | | | | | 2,5 |
| Jambu-Oleoresin, enthaltend 30 Gew.-% Spilanthol in 1,2-Propylenglycol (Robertet) | | 0,1 | 0,1 | | | | | |
| Homoeriodictyol | 5 | | 2,5 | | | | | |
| Eriodictyol | | 2,5 | | | | | | |
| Phloretin | | | | 2,5 | | | | |
| Hesperetin | | | | | 1 | | | |
| γ-Aminobuttersäure | | | 1,5 | | | | | |
| 2,4-Dihydroxybenzoesäur e-N-vanillylamid | | | | | | 2,5 | | |
| Gingerdion-[2] | | | | | | | | 2,5 |
| Diacetyltrimer | | | | | | | 0,5 | |
| Divanillin | | | | | | | | 0,5 |
| Propylenglycol | - | - | - | ad 100 | - | - | ad 100 | - |
| Ethanol | - | ad 100 | - | - | ad 100 | ad 100 | - | - |
| Maltodextrin | ad 100 | - | ad 100 | - | - | - | - | ad 100 |

Die Stoffe bzw. Lösungen werden in den oben angegebenen Mengenverhältnissen gemischt und dann mit Propylenglycol oder Ethanol aufgenommen und durch leichtes Erwärmen vollständig gelöst bzw. mit den festen Trägerstoffen homogen gemischt.

### Anwendungsbeispiel 2: Sprühgetrocknete Aromakompositionen als Halbfertigwaren zur Aromatisierung von Fertigwaren

| | Zubereitung (Einsatz in Gew.-%) | | | | | | | |
|---|---|---|---|---|---|---|---|---|
| Inhaltsstoff | A | B | C | D | E | F | G | H |
| Maltodextrin aus Weizen | 24,3 | 24,3 | 24,3 | 24,3 | 24,3 | 24,3 | 24,3 | 24,3 |
| Gummi Arabicum | 6,1 | 6,1 | 6,1 | 6,1 | 6,1 | 6,1 | 6,1 | 6,1 |
| Trans-Pellitorin nach WO 2004/043906 | 0,08 | 0,08 | 0,06 | 0,06 | 0,04 | 0,06 | 0,06 | 0,06 |
| Homoeriodictyol, Natriumsalz | 8,8 | 4,4 | | 8,8 | | | 7,8 | |
| Eriodictyol | | 4,4 | | | | | | |
| Phloretin | | | 8,8 | | | | | |
| γ-Aminobuttersäure | | | | 2,0 | | | | |
| 2,4-Dihydroxybenzoesä ure-N-vanillylamid | | | | | 8,8 | | | |
| Gingerdion-[2] | | | | | | 8,8 | | |
| Diacetyltrimer | | | | | | | 1,0 | |
| Divanillin | | | | | | | | 8,8 |
| Trinkwasser | ad 100 | ad 100 | ad 100 | ad 100 | ad 100 | ad 100 | ad 100 | ad 100 |

Das Trinkwasser wird in einem Behälter vorgelegt und das Maltodextrin und das Gummi Arabicum darin gelöst. Anschließend werden Bestandteile mit einem Mixer (Turrax) in die oben beschriebene Trägerstofflösung emulgiert. Die Temperatur des resultierenden Gemisches sollte 30°C nicht überschreiten. Das Gemisch wird dann sprühgetrocknet (Solltemperatur Eingang: 185 - 195°C, Solltemperatur Ausgang: 70 - 75°C). Die sprühgetrocknete Halbfertigware enthält ca. 18 - 22 % der erfindungsgemäßen Aromakompositionen.

Analog können auch sprühgetrocknete Zubereitungen mit erfindungsgemäßen anderen Aromakompositionen hergestellt werden.

### Anwendungsbeispiel 3: Aromamischungen zur Maskierung bitteren und adstringerenden Geschmacks

| | **Zubereitung (Einsatz in Gew.-%)** | | | | | | | | | | | |
|---|---|---|---|---|---|---|---|---|---|---|---|---|
| **Inhaltsstoff** | **A** | **B** | **C** | **D** | **E** | **F** | **G** | **H** | **I** | **J** | **K** | **L** |
| Symrise Sahnearoma sprühgetrocknet | 5,20 | | | | | | | | | | | |
| Symrise Sahnearoma in 1,2-Propylenglycol | | | | 1,50 | | 0,80 | | | | | | |
| Symrise Zuckeraroma sprühgetrocknet | | 10,50 | | | | | | | | | | |
| Symrise Zuckeraroma | | | 4,00 | | 1,50 | | | | | | | |
| Symrise Citronenaroma | | | | | | | 0,80 | | | | | |
| Symrise Grapefruitaroma | | | | | | | | 10,0 | | | | |
| Symrise Orangenaroma | | | | | | | | 5,00 | | | | |
| Symrise Zitronenaroma | | | | | | | | | 30,0 | | | |
| Symrise Ingweraroma | | | | | | | | | | | | 4,00 |
| Symrise Lemongrasaroma | | | | | | | | | | | | 0,50 |
| Symrise Mangoaroma | | | | | | | | | | 3,50 | | |
| Symrise Weißes Pfirsicharoma | | | | | | | | | | | 10,0 | |
| 10 Gew.-% Pellitorin (z.B. nach WO 2004/043906) in 1,2-Propylenglycol/Diethyl malonat | 0,05 | 0,10 | 3,00 | 0,25 | 0,50 | 0,20 | 0,10 | 0,05 | 0,10 | 0,10 | 0,50 | 0,30 |
| Homoeriodictyol, Natriumsalz | 0,625 | 2,45 | | | 1,25 | | 2,50 | 0,625 | 2,45 | 1,25 | 5,00 | 2,50 |
| γ-Aminobuttersäure | | | | 1,00 | | 0,4 | | | | | | |
| Hesperetin | | | | | | 1,20 | | | | | | |
| Divanillin | | | 3,25 | | 1,25 | | | | | | | |
| Wasser | | | | 20 | | | | | | | | |
| 1,2-Propylenglycol | - | - | - | ad 100 | - | ad 100 | - | | | | | |
| Maltodextrin | ad 100 | ad 100 | ad 100 | - | ad 100 | - | ad 100 | ad 100 | ad 100 | ad 100 | ad 100 | ad 100 |

Die Stoffe bzw. Lösungen werden in den oben angegebenen Mengenverhältnissen gemischt und dann mit Propylenglycol aufgenommen und durch leichtes Erwärmen vollständig gelöst bzw. mit den festen Trägerstoffen homogen gemischt.

### Anwendungsbeispiel 4: Sojamilchgetränke

### Vergleichszubereitung (A)

**Erfindungsgemäße Zubereitung enthaltend, erfindungsgemäße Aromakompositionen (B-D)**

| | Zubereitung (Angaben als Gew.-%) | | | |
|---|---|---|---|---|
| Inhaltsstoff | A | B | C | D |
| Sucrose | 3 % | 3% | 3% | 3 % |
| Aromakomposition nach Anwendungsbeispi el 3 B | - | 0,2 % | - | - |
| Aromakomposition nach Anwendungsbeispiel 3 D | - | - | 0,8 % | - |
| Aromakomposition nach Anwendungsbeispiel 3 F | - | - | - | 0,2 % |
| Sojamilch, Marke Sojasun, nicht-aromatisiert und nicht gesüßt | zu 100 % auffüllen | zu 100 % auffüllen | zu 100 % auffüllen | zu 100 % auffüllen |

Verglichen mit Zubereitung A war in Zubereitung B - D die Adstringens und die Bitterkeit wesentlich geringer. In Zubereitung D war zudem die bohnige Note wesentlich reduziert.

### Anwendungsbeispiel 5: Tee-basierte Getränke

### Vergleichszubereitung (A)

**Erfindungsgemäße Zubereitung, enthaltend erfindungsgemäße Aromakompositionen (B-D)**

| | Zubereitung (Angaben als Gew.-%) | | | |
|---|---|---|---|---|
| Inhaltsstoff | A | B | C | D |
| Grünteeextrakt, 80 % Polyphenole | 0,25 | 0,25 | 0,25 | 0,25 |
| Äpfelsäure, Citronensäure | 0,10 | 0,10 | 0,10 | 0,10 |
| Süßstoffmischung (Aspartam, Sucralose 1:1) | 0,01 | 0,01 | 0,01 | 0,01 |
| Aromakomposition nach - Anwendungsbeispiel 3 G | - | 0,2 % | - | - |
| Aromakomposition nach - Anwendungsbeispiel 3 K | - | - | 0,2 % | - |
| Aromakomposition nach Anwendungsbeispiel 3 K | | - | - | 0,2 % |
| Wasser | zu 100 % auffüllen | zu 100 % auffüllen | zu 100 % auffüllen | zu 100 % auffüllen |

Der Grünteextrakt, Säure und Süßstoffmischung sowie die Aromakompositionen wurden in 80 ° heißem Wasser gelöst und in Flaschen abgefüllt.

Verglichen mit Zubereitung A war in Zubereitung B - D die Adstringens und die Bitterkeit wesentlich geringer.

### Anwendungsbeispiel 6: Mischung zur Süßung von Kaffeegetränken

### Vergleichszubereitung (A)

**Erfindungsgemäße Zubereitung enthaltend, erfindungsgemäße Aromakompositionen (B-D)**

| | Zubereitung (Angaben als Gew.-%) | | | |
|---|---|---|---|---|
| Inhaltsstoff | A | B | C | D |
| Saccharin | 1,50 | 1,50 | 1,50 | 1,50 |
| Aromakomposition - nach Anwendungsbeispi el 3 C | | 1,00 % | - | 2,00 % |
| Aromakomposition - nach Anwendungsbeispi el 3 E | - | - | 5,00 % | - |
| Sorbitol | zu 100 % auffüllen | zu 100 % auffüllen | zu 100 % auffüllen | zu 100 % auffüllen |

Die Zubereitungen A-D werden mit 1% auf schwarzen Kaffee (frisch gebrüht) dosiert.

Verglichen mit Zubereitung A (Vergleich) war in Zubereitung B - D die Adstringens und die langanhaltende Süße vermindert. Die metallischen Noten wurden zudem reduziert. Zubereitung C hatte zudem ein Sucrose-typischeren Geschmack.

### Anwendungsbeispiel 7: Mischung zur Reduzierung der Bitterkeit von bitterer Schokolade

### Vergleichszubereitung (A)

**Erfindungsgemäße Zubereitung enthaltend, erfindungsgemäße Aromakompositionen (B-D)**

| | Zubereitung (Angaben als Gew.-%) | | | |
|---|---|---|---|---|
| Inhaltsstoff | A | B | C | D |
| Aroma nach Anwendungsbeispiel 1, Zubereitung A | - | 0,2 | 0,2 | 0,2 |
| Hesperetin, 18 % sprühgetrocknet auf Maltodextrin/Gummi Arabicum nach WO 2007/014879 | - | - | 0,03 | - |
| Vanillin | - | - | - | 0,10 |
| dunkle Schokoladenmasse, mind. 85 % Kakaogehalt | zu 100 % auffüllen | zu 100 % auffüllen | zu 100 % auffüllen | zu 100 % auffüllen |

Die Schokoladenmasse wird bei 40-45°C im Trockenschrank aufgeschmolzen und unter vorsichtigem Rühren die festen Aromabestandteile zugegeben und eingerührt. Die flüssige Schokoladenmasse wird in Formen gegossen und durch übliche Abkühlprozeduren auf Raumtemperatur gebracht.

Die Schokoladen nach Zubereitungsform B bis D sind deutlich weniger bitter und adstringierend als nach Zubereitung A; Zubereitung C ist zudem deutlich süßer, Zubereitung D ist zudem wesentlich weicher in der Aromawahrnehmung.

## Patentansprüche

1. Aromakomposition zum Verringern oder Unterdrücken von bitterem und adstringierendem Eindruck im Mundraum, umfassend
(i) einen oder mehrere speichelfördernde Aroma- und/oder Geschmackstoffe ausgewählt aus der Gruppe bestehend aus
(a) Wärme verursachenden oder Scharfstoffen ausgewählt aus der Gruppe bestehend aus: Capsaicinoiden, nämlich Capsaicin, Dihydrocapsaicin oder Nonivamid; Gingerolen, nämlich Gingerol-6, Gingerol-8, oder Gingerol-10; Gingerdionen, nämlich Gingerdion-6, Gingerdion-8 oder Gingerdion-10; Paradolen, nämlich Paradol-6, Paradol-8 oder Paradol-10; Dehydrogingerctionen, nämlich Dehydrogingerdion-6, Dehydrogingerdion-8 oder Dehydrogingerdion-10; Piperin und Piperinderivaten;
und/oder
(b) als stechend wahmehmbaren Stoffen ausgewählt aus der Gruppe bestehend aus: aromatischen Isothlocyanaten, nämlich Phenylethylisothiocyanat, Allylisothiocyanat, Cyclopropylisothiocyanat, Butylisothiocyanat, 3-Methylthiopropylisothiocyanat, 4-Hydroxybenzylisothiocyanat, 4-Methoxybenzylisothiocyanat;
und/oder
(c) einen physiologischen Kühleffekt auslösenden Stoffen ausgewählt aus der Gruppe bestehend aus Menthol; Mentholderivaten, nämlich I-Menthol, d-Menthol, racemisches Menthol, Isomenthol, Neoisomenthol, Neomenthol; Menthylethem, nämlich (L-Menthoxy)-1,2-propandiol, (L-Menthoxy)-2-methyl-1,2-propandiol, L-Menthyl-methylether; Menthylestern, nämlich Menthylformiat, Menthylacetat, Menthylisobutyrat, Menthyllactat, L-Menthyl-L-lactat, L-Menthyl-D-lactat, Menthyl-(2-methoxy)acetat, Menthyl-(2-methoxyethoxy)acetat, L-Menthylpyroglutamat; Menthylcarbonaten, nämlich L-Menthylpropylenglycolcarbonat, L-Menthylethylenglycolcarbonat, L-Menthylglycerincarbonat oder deren Gemische; Halbestern von Mentholen mit einer Dicarbonsäure oder deren Derivaten, nämlich Mono-L-Menthylsuccinat, Mono-L-Menthylglutarat, Mono-L-Menthylmalonat, O-L-Menthylbemsteinsäureester-N,N-(dimethyl)amid, O-L-Menthylbemsteinsäureesteramid; Menthancarbonsäureamide, nämlich L-Menthancarbonsäure-N-ethylamid [WS3], N^{α}-(L-Menthancarbonyl)glycinethylester [WS5]. L-Menthartcarbonsäure-N-(4-cyanophenyl)amid, L-Menthancarbonsäure-N-(alkoxyalkyl)amiden, L-Menthancarbonsäure-N-(alkylthioalkyl)amiden; (L-Menthancarbonyl)aminosäurealkylamiden; Menthon und Menthonderivaten, nämlich L-Menthonglycerinketal; 2,3-Dimethyl-2-(2-propyl)-butansäurederivaten, nämlich 2,3-Dimethyl-2-(2-propyl)-butansäure-N-methylamid [WS23]). Isopulegol und seine Ester (L-(-)-Isopulegol, L-(-)-Isopulegolacetat Menthanderivaten, nämlich p-Menthan-3,8-diol; Cubebol und synthetischen und natürliche Mischungen, enthaltend Cubebol; Pyrrolidonderivaten von Cycloalkyldionderivaten, nämlich 3-Methy)-2(1-pyrrolidinyl)-2-cyclopenten-1-on) und Tetrahydropyrimidin-2-onen, nämlich Icilin oder verwandte Verbindungen,
und/oder
(d) als kribbeind beschriebenen Alkamiden ausgewählt aus der Gruppe bestehend aus 2E,4E-Decadiensäure-N-isobutylamid (trans-Pellitorin); 2E,4Z-Decadiensäure-N-isobutylamid (cis-Pellitorin). 2Z,4Z- Decadiensäure-N-isobutylamid; 2Z,4E- Decadiensäure-N-isobutylamid; 2E,4E-Decadiensäure-N-([2S]-2-methylbutyl)amid; 2E,4E-Decadiensäure-N-([2S]-2-methylbutyl)amid; 2E,4E-Decadiensäure-N-([2R]-2-methylbutylamid); 2E,4Z-Decadiensäure-N-(2-methylbutyl)amid; 2E,4E-Decadiensäure-N-piperid (Achilleamid); 2E,4E-Decadiensäure-N-piperid (Sarmentin); 2E-Decensäure-N-isobutylamid; 3E-Decensäure-N-isobutylamid; 3E-Nonensäure-N-isobutylamid; 2E,6Z,8E-Decatriensäure-N-isobutylamid (Spilanthol); 2E,6Z,8E-Decatriensäure-N-([2S]-2-methylbutyl)amid (Homospilanthol); 2E,6Z,8E-Decatriensäure-N-([2R]-2-methylbutyl)amid; 2E-Decen-4-insäure-N-isobutylamid, 2Z-Decen-4-insäure-N-isobutylamid; 2E,6Z,8E,10E-Dodecatetraensäure-N-(2-methylpropyl)amid (α-Sanshool); 2E,6Z,8E,10E-Dodecatetraensäure-N-(2-hydroxy-2-methylpropyl)amid (α-Hydroxysanshool); 2E,6E,8E,10E-Dodecatetraensäure-N-(2-hydroxy-2-methylpropyl)amid (γ-Hydroxysanshool); 2E,4E,8Z,10E,12E-Tetradecapentaensäure-N-(2-hydroxy-2-methylpropyl)amid (γ-Hydroxysanshool); 2E,4E,8E,10E,12E-Tetradecapentaensäure-N-(2-hydroxy-2-methylpropyl)amid (γ-Hydroxyisosanshool); 2E,4E,8Z,10E,12E-Tetradecapentaensäure-N-(2-methyl-2-propenyl)amid (γ-Dehydrosanshool); 2E,4E,8Z,10E,12E-Tetradecapentaensäure-N-(2-methylpropyl)amid (γ-Sanshool); 2E,4E,8Z,11Z-Tetradecatetraensäurs-N-(2-hydroxy-2-methylpropyl)amid (Bungeanool); 2E,4E,8Z,11E-Tetradecatetraensäure-N-(2-hydroxy-2-methylpropyl)amid (Isobungeanool); 2E,4E,8Z-Tetradectriensäure-N-(2-hydroxy-2-methylpropyl)amid (Dihydrobungeanool) und 2E,4E -Tetradecadiensäure-N-(2-hydroxy-2-methylpropyl)amid (Tetrahydrobungeanool)
und
(ii) einen oder mehrere bittermaskierende Aroma- und/oder Geschmackstoffe jeweils ausgewählt aus der Gruppe bestehend aus
- Nucleotiden, und deren pharmazeutisch akzeptablen Salzen;
- Lactisolen,
- 2,4-Dihydroxybenzoesäure und/oder 3-Hydroxybenzoesäure;
- Natriumsalzen, ausgewählt aus der Gruppe bestehend aus Natriumlactat, Natriumcitrat, Natriumacetat und Natriumgluconoat;
- Hydroxyflavanonen,
- Hydroxybenzoesäureamiden, ausgewählt aus der Gruppe bestehend aus 2,4-Dihydroxybenzoesäurevanillylamid, 2,4-Dihydroxybenzoesäure-*N*-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N*-4-(hydroxy-3-methoxybenzyl)amid, 4-Hydroxybenzoesäure-*N*-(4-hydroxy-3-methoxybenzyl)amid, 2,4-Dihydroxybenzoesäure-*N*-(4-hydroxy-3-methoxybenzyl)amid-Mono-natriumsalz, 2,4-Dihydroxybenzoesaure-*N*-2-(4-hydroxy-3-methoxyphenyl)ethylamid, 2,4-Dihydroxybenzoesäure-*N*-(4-hydroxy-3-ethoxybenzyl)amid, 2,4-Dihydroxybenzoesäure-*N*-(3,4-dihydroxybenzyl)amid und 2-Hydroxy-5-methoxy-N-[2-(4-hydroxy-3-methoxyphenyl)ethyl]amid; 4-Hydroxybenzoesäurevanillylamid;
- Hydroxydeoxybenzoinen;
- Hydroxyphenylalkandionen,
- Diacetyltrimeren;
- γ-Aminobuttersäuren;
- Divanillinen und 4-Hydroxydihydrochalconen.

2. Aromakomposition nach Anspruch 1, ferner umfassend
- (iii) einen oder mehrere weitere Aromastoffe.
- und gegebenenfalls
- (iv) einen oder mehrere Hilfs- oder Trägerstoffe.

3. Aromakomposition nach einem der vorangehenden Ansprüche, wobei jeweils
(i) einer, mehrere oder alle der speichelfördernden Aroma- und/oder Geschmackstoffe ausgewählt sind aus der Gruppe, bestehend aus 2E,4E-Decadiensäure-N-isobutylamid (trans-Pellitorin), 2E,4Z- Decadiensäure-N-isobutylamid (cis-Pellitorin), 2Z,4Z- Decadiensäure-N-isobutylamid, 2Z,4E-Decadiensäure-N-isobutylamid, 2E,4E-Decadiensäure-N-piperid (Achilleamid), 2E,6Z,8E-Decatriensäure-N-isobutylamid (Spilanthol), 2E,6Z,8E-Decatriensäure-N-([2S]-2-methylbutyl)amid (Homospilanthol), 2E,6Z,8E-Decatriensäure-N-([2R]-2-methylbutyl)amid, 2E,6Z,8E,10E-Dodecatetraensäure-N-(2-methylpropyl)amid (α-Sanshool), 2E,6Z,8E,10E-Dodecatetraensäure-N-(2-hydroxy-2-methylpropyl)amid (α-Hydroxysanshool), 2E,4E,8Z,10E,12E-Tetradecapentaensäure-N-(2-methylpropyl)amid (γ-Sanshool) und 2E,4E,8Z,11Z-Tetradecatetraensäure-N-(2-hydroxy-2-methylpropyl)amid (Bungeanool) und jeweils
(ii) einer, mehrere oder alle der bittermaskierenden Aroma- und/oder Geschmackstoffe ausgewählt sind aus der Gruppe, bestehend aus Eriodictyol, Homoeriodictyol oder deren Natriumsalzen, 2,4-Dihydroxybenzoesäurevanillylamid, 2,4,6-Trihydroxybenzoesäure-*N*-(4-hydroxy-3-methoxybenzyl)amid, 2,4-Dihydroxybenzoesäure-*N*-(4-hydroxy-3-methoxybenzyl)amid-Mono-natriumsalz Gingerdion-[2], Gingerdion-[3], Gingerdion-[4], Dehydrogingerdion-[2], Dehydrogingerdion-[3], Dehydrogingerdion-[4]), Diacetyltrimeren, γ-Aminobuttersäure, Divanillin, Phloretin und Davidigenin.

4. Aromakomposition nach einem der vorangehenden Ansprüche, wobei jeweils
(i) einer, mehrere oder alle der speichelfördernden Aroma- und/oder Geschmackstoffe ausgewählt sind aus der Gruppe, bestehend aus 2E,4E-Decadiensäure-N-isobutylamid (Pellitorin), 2E,4Z-Decadiensäure-N-isobutylamid (cis-Pellitorin), 2Z,4Z- Decadiensäure-N-isobutylamid, 2Z,4E- Decadiensäure-N-isobutylamid, 2E,6Z,8E-Decatriensäure-N-isobutylamid (Spilanthol), 2E,6Z,8E,10E-Dodecatetraensäure-N-(2-methylpropyl)amid (α-Sanshool) und 2E,4E,8Z,11z-Tetradecatetraensäure-N-(2-hydroxy-2-methylpropyl)amid (Bungeanool)
und jeweils
(ii) einer, mehrere oder alle der bittermaskierenden Aroma- und/oder Geschmackstoffe ausgewählt sind aus der Gruppe, bestehend aus Eriodictyol, Homoeriodictyol oder deren Natriumsalze, 2,4-Dihydroxybenzoesäurevanillylamid, Gingerdion-[2], Gingerdion-[3], Phloretin und Davidigenin.

5. Aromakomposition nach einem der vorangehenden Ansprüche, wobei die Komponenten der Gruppe (i) zu den Kompontenen der Gruppe (ii) in einem Verhältnis von 1 : 1.000.000 bis 1:1 enthalten sind, bezogen auf das Gewichtsverhältnis der beiden Komponenten zueinander.

6. Aromakomposition nach einem der vorangehenden Ansprüche, wobei die Aromakomposition außerdem eine zur Verstärkung des Geschmackseindruckes umami, süß, salzig und/oder gegebenenfalls leicht sauer geeignete Komponente umfasst.

7. Aromakomposition nach einem der vorangehenden Ansprüche, wobei die Aromakomposition außerdem wenigstens eine Verbindung umfasst, die bittere und adstringierende Eindrücke im Mundraum erzeugen kann, wobei diese Eindrücke aufgrund der enthaltenen Komponenten der Gruppen (i) und (ii) verringert und bevorzugt nicht wahrnehmbar sind.

8. Zubereitung, umfassend eine Aromakomposition nach einem der vorangehenden Ansprüche.

9. Zubereitung nach Anspruch 8, wobei die Zubereitung eine pharmazeutische Zubereitung, eine Halbfertigware, unmittelbar zur Ernährung oder zum Genuss bestimmt und/oder der Mundpflege dienend ist.

10. Zubereitung nach Anspruch 8 oder 9, wobei bezogen auf die Gesamtteile der Zubereitung die Konzentration
wenigstens einer, bevorzugt der Summe der Komponenten der Gruppe (i), im Bereich von 0,005 bis 5 ppm, bevorzugt von 0,02 bis 2 ppm, besonders bevorzugt von 0,05 bis 0,5 ppm liegt und
die Summe der Komponenten der Gruppe (ii), im Bereich von 0,5 bis 500 ppm, bevorzugt von 10 bis 200 ppm, besonders bevorzugt von 20 bis 100 ppm liegt und bevorzugt
die Summe der Komponenten der Gruppe (iii), im Bereich von 0,0005 bis 500 ppm, bevorzugt von 0,005 bis 100 ppm, besonders bevorzugt 0,5 bis 50 ppm liegt.

11. Zubereitung nach einem der Ansprüche 8 bis 10, wobei die Gesamtmenge aller Komponenten (i), (ii) und (iii) bezogen auf die Gesamtteile der Zubereitung im Bereich von 0,5 bis 500 ppm, bevorzugt im Bereich von 5 bis 200 ppm, besonders bevorzugt im Bereich von 10 bis 100 ppm liegt.

12. Verwendung einer Aromakomposition nach einem der Ansprüche 1 bis 7 zum Verringern oder Unterdrücken einer bitteren und adstringierenden Wirkung einer Verbindung.

13. Verfahren zum Verringern oder Unterdrücken der bittereren und adstringierenden Wirkung einer Verbindung, umfassend die Schritte
a) Bereitstellen einer Verbindung, die bittere und adstringierende Wirkung im Mundraum entfalten kann,
b) Bereitstellen einer erfindungsgemäßen Aromakomposition nach einem der Ansprüche 1 bis 7 und
c) Vermischen der in Schritt a) und b) bereitgestellten Komponenten in einem Verhältnis zueinander, so dass die Verbindung mit bitterer und adstringierender Wirkung diese Wirkung bei Einführen des Gemisches in den Mundraum nur abgeschwächt oder gar nicht entfaltet.

## Claims

1. Aroma composition for reducing or suppressing a bitter and astringent impression in the oral cavity, comprising
(i) one or more salivatory aroma substances and/or flavourings selected from the group consisting of
(a) warmth-inducing or pungent substances, selected from the group consisting of: capsaicinoids, in particular capsaicin, dihydrocapsaicin or nonivamide; gingerols, in particular gingerol-6, gingerol-8, or gingerol-10; gingerdiones, in particular gingerdione-6, gingerdione-8 or gingerdione-10; paradols, in particular paradol-6, paradol-8 or paradol-10; dehydrogingerdiones, in particular dehydrogingerdione-6, dehydrogingerdione-8 or dehydrogingerdione-10; piperine and piperine derivatives;
and/or
(b) substances perceivable as pungent, preferably selected from the group consisting of: aromatic isothiocyanates, in particular phenylethyl isothiocyanate, allyl isothiocyanate, cyclopropyl isothiocyanate, butyl isothiocyanate, 3-methylthiopropyl isothiocyanate, 4-hydroxybenzyl isothiocyanate, 4-methoxybenzyl isothiocyanate;
and/or
(c) substances which trigger a physiological cooling effect, selected from the group consisting of menthol; menthol derivatives in particular I-menthol, d-menthol, racemic menthol, isomenthol, neoisomenthol, neomenthol; menthyl ethers, in particular (L-menthoxy)-1,2-propanediol, (L-menthoxy)-2-methyl-1,2-propanediol, L-menthyl methyl ether; menthyl esters, in particular menthyl formate, menthyl acetate, menthyl isobutyrate, menthyl lactate, L-menthyl L-lactate, L-menthyl D-lactate, menthyl (2-methoxy)acetate, menthyl (2-methoxyethoxy)acetate, L-menthyl pyroglutamate; menthyl carbonates, in particular L-menthyl propylene glycol carbonate, L-menthyl ethylene glycol carbonate, L-menthyl glycerol carbonate or mixtures thereof; semi-esters of menthols with a dicarboxylic acid or the derivatives thereof, in particular mono-L-menthyl succinate, mono-L-menthyl glutarate, mono-L-menthyl malonate, O-L-menthyl succinate N,N-(dimethyl)amide, O-L-menthyl succinamide; menthane carboxamides, in particular L-menthane carboxylic acid-N-ethylamide [WS3], N^{α}-(L-menthane carbonyl)glycine ethyl ester [WS5], L-menthane carboxylic acid-N-(4-cyanophenyl)amide, L-menthane carboxylic acid-N-(alkoxyalkyl)amides, L-menthane carboxylic acid-N-(alkylthioalkyl)amides; (L-menthane carbonyl)amino acid alkylamides; menthone and menthone derivatives, in particular L-menthone glycerol ketal; 2,3-dimethyl-2-(2-propyl)-butanoic acid derivatives, in particular 2,3-dimethyl-2-(2-propyl)-butanoic acid-N-methylamide [WS23]), isopulegol and its esters (L-(-)-isopulegol, L-(-)-isopulegol acetate; menthane derivatives, in particular p-menthane-3,8-diol; cubebol and synthetic and natural mixtures containing cubebol; pyrrolidone derivatives of cycloalkyldione derivatives, in particular 3-methyl-2(1-pyrrolidinyl)-2-cyclopenten-1-one) and tetrahydropyrimidin-2-ones, in particular icilin or related compounds,
and/or
(d) alkamides described as tingling, selected from the group consisting of 2E,4E-decadienoic acid-N-isobutylamide (trans-pellitorin); 2E,4Z-decadienoic acid-N-isobutylamide (cis-pellitorin); 2Z,4Z-decadienoic acid-N-isobutylamide; 2Z,4E-decadienoic acid-N-isobutylamide; 2E,4E-decadienoic acid-N-([2S]-2-methylbutyl)amide; 2E,4E-decadienoic acid-N-([2S]-2-methylbutyl)amide; 2E,4E-decadienoic acid-N-([2R]-2-methylbutylamide); 2E,4Z-decadienoic acid-N-(2-methylbutyl)amide; 2E,4E-decadienoic acid-N-piperide (achilleamide); 2E,4E-decadienoic acid-N-piperide (sarmentine); 2E-decenoic acid-N-isobutylamide; 3E-decenoic acid-N-isobutylamide; 3E-nonenoic acid-N-isobutylamide; 2E,6Z,8E-decatrienoic acid-N-isobutylamide (spilanthol); 2E,6Z,8E-decatrienoic acid-N-([2S]-2-methylbutyl)amide (homospilanthol); 2E,6Z,8E-decatrienoic acid-N-([2R]-2-methylbutyl)amide; 2E-decen-4-ynoic acid-N-isobutylamide; 2Z-decen-4-ynoic acid-N-isobutylamide; 2E,6Z,8E,10E-dodecatetraenoic acid-N-(2-methylpropyl)amide (α-sanshool); 2E,6Z,8E,10E-dodecatetraenoic acid-N-(2-hydroxy-2-methylpropyl)amide (α-hydroxysanshool); 2E,6E,8E,10E-dodecatetraenoic acid-N-(2-hydroxy-2-methylpropyl)amide (γ-hydroxysanshool); 2E,4E,8Z,10E,12E-tetradecapentaenoic acid-N-(2-hydroxy-2-methylpropyl)amide (γ-hydroxysanshool); 2E,4E,8E,10E,12E-tetradecapentaenoic acid-N-(2-hydroxy-2-methylpropyl)amide (γ-hydroxyisosanshool); 2E,4E,8Z,10E,12E-tetradecapentaenoic acid-N-(2-methyl-2-propenyl)amide (γ-dehydrosanshool); 2E,4E,8Z,10E,12E-tetradecapentaenoic acid-N-(2-methylpropyl)amide (γ-sanshool); 2E,4E,8Z,11Z-tetradecatetraenoic acid-N-(2-hydroxy-2-methylpropyl)amide (bungeanool); 2E,4E,8Z,11E-tetradecatetraenoic acid-N-(2-hydroxy-2-methylpropyl)amide (isobungeanool); 2E,4E,8Z-tetradecatrienoic acid-N-(2-hydroxy-2-methylpropyl)amide (dihydrobungeanool) and 2E,4E-tetradecadienoic acid-N-(2-hydroxy-2-methylpropyl)amide (tetrahydrobungeanool)
and
(ii) one or more bitterness-masking aroma substances and/or flavourings in each case selected from the group consisting of
- nucleotides and the pharmaceutically acceptable salts thereof;
- lactisoles;
- 2,4-dihydroxybenzoic acid and/or 3-hydroxybenzoic acid;
- sodium salts, selected from the group consisting of sodium lactate, sodium citrate, sodium acetate and sodium gluconate;
- hydroxyflavanones;
- hydroxybenzoic acid amides, selected from the group consisting of 2,4-dihydroxybenzoic acid vanillylamide, 2,4-dihydroxybenzoic acid-*N*-(4-hydroxy-3-methoxybenzyl)amide, 2,4,6-trihydroxybenzoic acid-*N*-(4-hydroxy-3-methoxybenzyl)amide, 2-hydroxybenzoic acid-*N*-(4-hydroxy-3-methoxybenzyl)amide, 4-hydroxybenzoic acid-*N*-(4-hydroxy-3-methoxybenzyl)amide, 2,4-dihydroxybenzoic acid-*N*-(4-hydroxy-3-methoxybenzyl)amide monosodium salt, 2,4-dihydroxybenzoic acid-*N*-2-(4-hydroxy-3-methoxyphenyl)ethylamide, 2,4-dihydroxybenzoic acid-*N*-(4-hydroxy-3-ethoxybenzyl)amide, 2,4-dihydroxybenzoic acid-*N*-(3,4-dihydroxybenzyl)amide and 2-hydroxy-5-methoxy-N-[2-(4-hydroxy-3-methoxyphenyl)ethyl]amide; 4-hydroxybenzoic acid vanillylamide;
- hydroxydeoxybenzoins;
- hydroxyphenyl alkanediones;
- diacetyl trimers;
- γ-aminobutyric acids;
- divanillins and 4-hydroxydihydrochalcones.

2. Aroma composition according to claim 1, further comprising
- (iii) one or more additional aroma substances,
- and if necessary
- (iv) one or more excipients or carriers.

3. Aroma composition according to any one of the preceding claims, wherein in each case
(i) one, a plurality of or all of the salivatory aroma substances and/or flavourings are selected from the group consisting of 2E,4E-decadienoic acid-N-isobutylamide (trans-pellitorin), 2E,4Z-decadienoic acid-N-isobutylamide (cis-pellitorin), 2Z,4Z-decadienoic acid-N-isobutylamide, 2Z,4E-decadienoic acid-N-isobutylamide, 2E,4E-decadienoic acid-N-piperide (achilleamide), 2E,6Z,8E-decatrienoic acid-N-isobutylamide (spilanthol), 2E,6Z,8E-decatrienoic acid-N-([2S]-2-methylbutyl)amide (homospilanthol), 2E,6Z,8E-decatrienoic acid-N-([2R]-2-methylbutyl)amide, 2E,6Z,8E,10E-dodecatetraenoic acid-N-(2-methylpropyl)amide (α-sanshool), 2E,6Z,8E,10E-dodecatetraenoic acid-N-(2-hydroxy-2-methylpropyl)amide (α-hydroxysanshool), 2E,4E,8Z,10E,12E-tetradecapentaenoic acid-N-(2-methylpropyl)amide (γ-sanshool) and 2E,4E,8Z,11Z-tetradecatetraenoic acid-N-(2-hydroxy-2-methylpropyl)amide (bungeanool)
and in each case
ii) one, a plurality of or all of the bitterness-masking aroma substances and/or flavourings are selected from the group consisting of eriodictyol, homoeriodictyol or the sodium salts thereof, 2,4-dihydroxybenzoic acid vanillylamide, 2,4,6-trihydroxybenzoic acid-*N*-(4-hydroxy-3-methoxybenzyl)amide, 2,4-dihydroxybenzoic acid-*N*-(4-hydroxy-3-methoxybenzyl)amide monosodium salt, gingerdione-[2], gingerdione-[3], gingerdione-[4], dehydrogingerdione-[2], dehydrogingerdione-[3], dehydrogingerdione-[4], diacetyl trimers, γ-aminobutyric acid, divanillin, phloretin and davidigenin.

4. Aroma composition according to any one of the preceding claims, wherein in each case
(i) one, a plurality of or all of the salivatory aroma substances and/or flavourings are selected from the group consisting of 2E,4E-decadienoic acid-N-isobutylamide (pellitorin), 2E,4Z-decadienoic acid-N-isobutylamide (cis-pellitorin), 2Z,4Z-decadienoic acid-N-isobutylamide, 2Z,4E-decadienoic acid-N-isobutylamide, 2E,6Z,8E-decatrienoic acid-N-isobutylamide (spilanthol), 2E,6Z,8E,10E-dodecatetraenoic acid-N-(2-methylpropyl)amide (a-sanshool) and 2E,4E,8Z,11Z-tetradecatetraenoic acid-N-(2-hydroxy-2-methylpropyl)amide (bungeanool)
and in each case
(ii) one, a plurality of or all of the bitterness-masking aroma substances and/or flavourings are selected from the group consisting of eriodictyol, homoeriodictyol or the sodium salts thereof, 2,4-dihydroxybenzoic acid vanillylamide, gingerdione-[2], gingerdione-[3], phloretin and davidigenin.

5. Aroma composition according to any one of the preceding claims, wherein the components of group (i) are contained in a ratio to the components of group (ii) of 1:1,000,000 to 1:1, relative to the ratio by weight of the two components.

6. Aroma composition according to any one of the preceding claims, wherein the aroma composition additionally comprises a component suitable for enhancing the taste impression umami, sweet, salty and/or if applicable slightly sour.

7. Aroma composition according to any one of the preceding claims, wherein the aroma composition additionally comprises at least one compound which may produce bitter and astringent impressions in the oral cavity, wherein these impressions are reduced and are preferably imperceptible as a result of the components of groups (i) and (ii) contained in the composition.

8. Preparation comprising an aroma composition according to any one of the preceding claims.

9. Preparation according to claim 8, wherein the preparation is a pharmaceutical preparation, a semi-finished product intended for immediate nutrition or consumption, and/or serving for oral care.

10. Preparation according to claim 8 or claim 9, wherein relative to the total preparation, the concentration
of at least one, preferably of the total of all of the components of group (i), lies in the range from 0.005 to 5 ppm, preferably from 0.02 to 2 ppm, particularly preferably from 0.05 to 0.5 ppm and
the total of all the components of group (ii) lies in the range from 0.5 to 500 ppm, preferably from 10 to 200 ppm, particularly preferably from 20 to 100 ppm and preferably
the total of all the components of group (iii) lies in the range from 0.0005 to 500 ppm, preferably from 0.005 to 100 ppm, particularly preferably from 0.5 to 50 ppm.

11. Preparation according to any one of claims 8 to 10, wherein the total quantity of all the components (i), (ii) and (iii) relative to the total preparation lies in the range from 0.5 to 500 ppm, preferably in the range from 5 to 200 ppm, particularly preferably in the range from 10 to 100 ppm.

12. Use of an aroma composition according to any one of claims 1 to 7 for reducing or suppressing a bitter and astringent effect of a compound.

13. Method of reducing or suppressing the bitter and astringent effect of a compound, comprising the steps
a) providing a compound, which may have a bitter and astringent effect in the oral cavity,
b) providing an aroma composition according to the invention according to any one of claims 1 to 7 and
c) mixing the components provided in steps a) and b) in a ratio to one another such that the compound with the bitter and astringent effect displays this effect only to a lesser degree or not at all on introduction of the mixture into the oral cavity.

## Revendications

1. Composition aromatique, destinée à réduire ou à supprimer une impression amère et astringente dans la cavité buccale, comprenant:
(i) une ou plusieurs substances aromatiques et/ou sapides à effet salivant, sélectionnées dans le groupe constitué de:
(a) substances provoquant un effet de chaleur ou substances pimentée sélectionnées dans le groupe constitué de: capsaïcinoïdes, à savoir la capsaïcine, la dihydrocapsaïcine ou la nonivamide; gingérols, à savoir le gingérol-6, le gingérol-8 ou le gingérol-10; gingerdiones, à savoir la gingerdione-6, la gingerdione-8 ou la gingerdione-10; paradols, à savoir le paradol-6, le paradol-8 ou le paradol-10; déhydrogingerdiones, à savoir la déhydrogingerdione-6, la déhydrogingerdione-8 ou la déhydrogingerdione-10; pipérine et de dérivés de la pipérine;
et/ou
(b) substances produisant un effet piquant, sélectionnées dans le groupe constitué de: isothiocyanates aromatiques, à savoir le phényléthylisothiocyanate, l'allylisothiocyanate, le cyclopropylisothiocyanate, le butylisothiocyanate, le 3-méthylthiopropylisothiocyanate, le 4-hydroxybenzoylisothiocyanate, le 4-méthoxybenzoylisothiocyanate;
et/ou
(c) substances produisant un effet de refroidissement physiologique, sélectionnées dans le groupe constitué de menthol; des dérivés de menthol, à savoir le 1-menthol, le d-menthol, le menthol racémique, l'isomenthol, le néoisomenthol, le néomenthol; de menthyléthers, à savoir le (L-menthoxy)-1,2-propanediol, le (L-menthoxy)-2-méthyle-1,2-propanediol, le L-menthyl-méthyléther; d'esters de menthyle, à savoir le formiate de menthyle, l'acétate de menthyle, l'isobutyrate de menthyle, le lactate de menthyle, le L-lactate de L-menthyle, le D-lactate de L-menthyle, le (2-méthoxy)acétate de menthyle, le (2-méthoxyéthoxy)acétate de menthyle, le pyroglutamate de L-menthyle; de carbonates de menthyle, à savoir le propylèneglycolcarbonate de L-menthyle, le éthylèneglycérolcarbonate de L-menthyle, le glycérolcarbonate de L-menthyl ou leurs mélanges; de demi-esters de menthols avec un acide dicarboxylique ou leurs dérivés, à savoir le mono-L-menthylsuccinate, le mono-L-menthylglutarate, le mono-L-menthylmalonate, le N-N-(diméthyl)amide ester d'acide O-L-menthylsuccinique, l'ester amide d'acide O-L-menthylsuccinique; d'amides d'acide menthancarboxylique, à savoir le N-éthylamide d'acide L-menthancarboxylique [WS3], le N^{α}(L-menthanecarbonyl)glycinéthylester [WS5], le N-(4-cyanophényl)amide d'acide L-menthancarboxylique, les N-(alkoxyalkyl)amides d'acide L-menthancarboxylique, les N-(alkylthioalkyl)amides d'acide L-menthancarboxylique, les alkylamides d'acides (L-mentanecarbonyl)aminés; de menthone et des dérivés de menthone, à savoir le L-menthoneglycérinecétal; de dérivés d'acide 2,3-diméthyl-2-(2-propyl)butyrique, à savoir le N-métylamide d'acide 2,3-diméthyl-2-(2-propyl)butyrique [WS23]; de l'isopulégol et ses esters (L-(-)-isopulégol, acétate de L-(-)-isopulégol); de dérivés de menthane, à savoir le p-menthane-3,8-diol; de cubébol et des mélanges synthétiques et naturels à base de cubébol; de dérivés de pyrrolidone de dérivés de cycloalkyldione, à savoir le 3-méthyl-2(1-pyrrolidinyl)-2-cyclopentèn-1-one) et de tétrahydropyrimidin-2-ones, à savoir l'iciline ou des liaisons apparentées
et/ou
(d) alcamides décrits comme produisant un effet de picotement, sélectionnés dans le groupe constitué du N-isobutylamide de l'acide 2E,4E-décadiénique (trans-pellitorine); du N-isobutylamide de l'acide 2E,4Z-décadiénique (cis-pellitorine); du N-isobutylamide de l'acide 2Z,4Z-décadiénique, du N-isobutylamide de l'acide 2Z,4E-décadiénique; du N-([2S]-2-méthylbutyl)amide de l'acide 2E,4E-décadiénique; du N-([2S]-2-méthylbutyl)amide de l'acide 2E,4E-décadiénique; du N-([2R]-2-méthylbutylamide de l'acide 2E,4E-décadiénique; du N-(2-méthylbutyl)amide de l'acide 2E,4Z-décadiénique; du N-pipéride de l'acide 2E,4E-décadiénique (achilléamide); du N-pipéride de l'acide 2E,4E-décadiénique (sarmentin); du N-isobutylamide de l'acide 2E-décénoïque; du N-isobutylamide de l'acide 3E-décénoïque; du N-isobutylamide de l'acide 3E-nonéique; du N-isobutylamide de l'acide 2E,6Z,8E-décatriénique (spillanthol); du N-([2S]-2-méthylbutyl)amide de l'acide 2E,6Z,8E-décatriénique (homospilanthol); du N-([2R]-2-méthylbutyl)amide de l'acide 2E,6Z,8E-décatriénique; du N-isobutylamide de l'acide 2E-décén-4-inique; du N-isobutylamide de l'acide 2Z-décén-4-inique; du N-(2-méthylpropyl)amide de l'acide 2E,6Z,8E,10E-dodécatétraénique (α-sanshool); du N-(2-hydroxy-2-méthylpropyl)amide de l'acide 2E,6Z,8E,10E-dodécatétraénique (α-hydroxysanshool); de N-(2-hydroxy-2-méthylpropyl)amide de l'acide 2E,6E,8E,10E-dodécatétraénique (γ-hydroxysanshool); du N-(2-hydroxy-2-méthylpropyl)amide de l'acide 2E,4E,8Z,10E,12E-tétradécapentaénique (γ-hydroxysanshool); du N-2-hydroxy-2-méthylpropyl)amide de l'acide 2E,4E,8E,10E,12E-tétradécapentaénique (γ-hydroxyisosanshool); du N-(2-méthyl-2-propényl)amide de l'acide 2E,4E,8Z,10E,12E-tétradécapentaénique (γ-déhydrosanshool); du N-(2-méthylpropyl)amide de l'acide 2E,4E,8Z,10E,12E-tétradécapentaénique (γ-sanshool); du N-(2-hydroxy-2-méthylpropyl)amide de l'acide 2E,4E,8Z,11Z-tétradécatétraénique (bungéanool); du N-(2-hydroxy-2-méthylpropyl)amide de l'acide 2E,4E,8Z,11E-tétradécatétraénique (isobungéanool); du N-(2-hydroxy-2-méthylpropyl)amide de l'acide 2E,4E,8Z-tétradécatriénique (dihydrobungéanool) et du N-(2-hydroxy-2-méthylpropyl)amide de l'acide 2E,4E-tétradécadiénique (tétrahydrobungéanool)
et
(ii) une ou plusieurs substances aromatiques et/ou sapides masquant le goût amer, sélectionnés respectivement dans le groupe constitué de:
- nucléotides, et des sels pharmaceutiquement acceptables de ceux-ci;
- lactisoles,
- l'acide 2,4-dihydroxybenzoïque et/ou de l'acide 3-hydroxybénzoïque;
- sels de sodium, sélectionnés dans le groupe constitué du lactate de sodium, du citrate de sodium, de l'acétate de sodium et du gluconoate de sodium;
- hydroxyflavanones;
- amides de l'acide hydroxybenzoïque, sélectionnés dans le groupe constitué du vanillylamide de l'acide 2,4-dihydroxybenzoïque, du N-(4-hydroxy-3-méthoxybenzyl)amide de l'acide 2,4-dihydroxybenzoïque, du N-(4-hydroxy-3-méthoxybenzyl)amide de l'acide 2,4,6-trihydroxybenzoïque, du N-4-(hydroxy-3-méthoxybenzyl)amide de l'acide 2-hydroxybenzoïque, du N-(4-hydroxy-3-méthoxybenzyl)amide de l'acide 4-hydroxybenzoïque, du sel monosodique du N-(4-hydroxy-3-méthoxybenzyl)amide de l'acide 2,4-dihydroxybenzoïque, du N-2-(4-hydroxy-3-méthoxyphényl)éthylamide de l'acide 2,4-dihydroxybenzoïque, du N-(4-hydroxy-3-éthoxybenzyl)amide de l'acide 2,4-dihydroxybenzoïque, du N-(3,4-dihydroxybenzyl)amide de l'acide 2,4-dihydroxybenzoïque et du N-[2-(4-hydroxy-3-méthoxyphényl)éthyl]amide de 2-hydroxy-5-méthoxy; du vanillylamide de l'acide 4-hydroxybenzoïque;
- hydroxydésoxybenzoïnes;
- hydroxyphénylalcandiones;
- diacétyltrimères;
- acides γ-aminobutyriques;
- divanillines et 4-hydroxydihydrochalcones.

2. Composition aromatique selon la revendication 1, comprenant en outre
(iii) une ou plusieurs substances aromatiques additionnelles et le cas échéant
(iv) un ou plusieurs adjuvants ou vecteurs.

3. Composition aromatique selon l'une quelconque des revendications précédentes, dans laquelle respectivement
(i) un, plusieurs ou toutes les substances aromatiques et/ou sapides à effet salivant sont sélectionnés dans le groupe constitué du N-isobutylamide de l'acide 2E,4E-décadiénique (trans-pellitorine), du N-isobutylamide de l'acide 2E,4Z-décadiénique (cis-pellitorine), du N-isobutylamide de l'acide 2Z,4Z-décadiénique, du N-isobutylamide de l'acide 2Z,4E-décadiénique, du N-pipéride de l'acide 2E,4E-décadiénique (achilléamide), du N-isobutylamide de l'acide 2E,6Z,8E-décatriénique (spillanthol), du N-([2S]-2-méthylbutyl)amide de l'acide 2E,6Z,8E-décatriénique (homospilanthol), du N-([2R]-2-méthylbutyl)amide de l'acide 2E,6Z,8E-décatriénique, du N-(2-méthylpropyl)amide de l'acide 2E,6Z,8E,10E-dodécatétraénique (α-sanshool), du N-(2-hydroxy-2-méthylpropyl)amide de l'acide 2E,6Z,8E,10E-dodécatétraénique (α-hydroxysanshool), du N-(2-méthylpropyl)amide de l'acide 2E,4E,8Z,10E,12E-tétradécapentaénique (γ-sanshool) et du N-(2-hydroxy-2-méthylpropyl)amide de l'acide 2E,4E,8Z,11Z-tétradécatétraénique (bungéanool);
et respectivement
(ii) une, plusieurs ou toutes les substances aromatiques et/ou sapides masquant le goût amer sélectionnés dans le groupe constitué de l'ériodictyol, l'homoériodictyol ou les sels de sodium de ceux-ci, du vanillylamide de l'acide 2,4-dihydroxybenzoïque, du N-(4-hydroxy-3-méthoxybenzyl)amide de l'acide 2,4,6-trihydroxybenzoïque, du sel monosodique du N-(4-hydroxy-3-méthoxybenzyl)amide de l'acide 2,4-dihydroxybenzoïque, de la gingerdione-[2], de la gingerdione-[3], de la gingerdione-[4], de la déhydrogingerdione-[2], de la déhydrogingerdione-[3], de la déhydrogingerdione-[4], des diacétyltrimères, de l'acide γ-aminobutyrique, la divanilline, la phlorétine et la davidigénine.

4. Composition aromatique selon l'une quelconque des revendications précédentes, comprenant respectivement
(i) une, plusieurs ou toutes les substances aromatiques et/ou sapides à effet salivant, sélectionnés dans le groupe constitué du N-isobutylamide de l'acide 2E,4E-décadiénique (Pellitorine), du N-isobutylamide de l'acide 2E,4Z-décadiénique (cis-pellitorine), du N-isobutylamide de l'acide 2Z,4Z-décadiénique, du N-isobutylamide de l'acide 2Z,4E-décadiénique, du N-isobutylamide de l'acide 2E,6Z,8E-décatriénique (spilanthol), du N-(2-méthylpropyl)amide de l'acide 2E,6Z,8E,10E-dodécatétraénique (α-Sanshool) et du N-(2-hydroxy-2-méthylpropyl)amide de l'acide 2E,4E,8Z,11Z-tétradécatétraénique (bungéanool)
et respectivement
(ii) une, plusieurs ou toutes les substances aromatiques et/ou sapides masquant le goût amer, sélectionnés dans le groupe constitué de l'ériodictyol, l'homoériodictyol ou les sels de sodium de ceux-ci, du vanillylamide de l'acide 2,4-dihydroxybenzoïque, sw la gingerdione-[2], de la gingerdione-[3], la phlorétine et la davidigénine.

5. Composition aromatique selon l'une quelconque des revendications précédentes, contenant les composants du groupe (i) dans un rapport compris entre 1:1.000.000 et 1:1 par rapport aux composants du groupe (ii), par rapport au rapport en poids mutuel des deux composants.

6. Composition aromatique selon l'une quelconque des revendications précédentes, la composition aromatique comprenant en outre une composante umami, sucrée, salée et/ou éventuellement légèrement acide destinée à renforcer le goût perçu.

7. Composition aromatique selon l'une quelconque des revendications précédentes, la composition aromatique comprenant en outre au moins une liaison, pouvant produire des impressions amère et astringente dans la cavité buccale, ces impressions étant réduites et de préférence non perceptibles grâce aux composants contenus dans les groupes (i) et (ii).

8. Préparation comprenant une composition aromatique selon l'une quelconque des revendications précédentes.

9. Préparation selon la revendication 8, la préparation étant une préparation pharmaceutique, un produit semi-fini, servant directement à l'alimentation ou à la saveur et/ou à l'hygiène buccale.

10. Préparation selon les revendications 8 ou 9, dans laquelle, par rapport à l'ensemble des composants de la préparation, la concentration d'au moins un, de préférence de la somme des composants du groupe (i) est comprise dans l'intervalle allant de 0,005 à 5 ppm, de préférence de 0,02 à 2 ppm, dans les cas les plus préférés entre 0,05 et 0,5 ppm; et
la somme des composants du groupe (ii) est comprise dans l'intervalle allant de 0,5 à 500 ppm, de préférence de 10 à 200 ppm, dans les cas particulièrement préférés de 20 à 100 ppm;
la somme des composants du groupe (iii) est comprise dans l'intervalle allant de 0,0005 à 500 ppm, de préférence de 0,005 à 100 ppm, et dans les cas les plus préférés de 0,5 à 50 ppm.

11. Préparation selon l'une quelconque des revendications 8 à 10, dans laquelle la quantité globale de tous les composants (i), (ii) et (iii), par rapport aux parties totales de la préparation, est comprise dans l'intervalle allant de 0,5 à 500 ppm, de préférence dans l'intervalle allant de 5 à 200 ppm, et dans les cas les plus préférés dans l'intervalle allant de 10 à 100 ppm.

12. Utilisation d'une composition aromatique selon l'une quelconque des revendications 1 à 7 pour réduire ou supprimer un effet amer et astringent d'une liaison.

13. Procédé de réduction ou de suppression de l'effet amer et astringent d'une liaison, comprenant les étapes ci-dessous:
a) préparation d'une liaison, pouvant déployer un effet amer et astringent dans la cavité buccale;
b) préparation d'une composition aromatique selon l'invention, selon l'une quelconque des revendications 1 à 7; et
c) mélange des composants préparés lors des étapes a) et b) dans un rapport tel que l'effet amer et astringent de la liaison est réduit ou supprimé lors de l'introduction du mélange dans la cavité buccale.
